(19) Europäisches Patentamt / European Patent Office / Office européen des brevets

(11) **EP 4 147 766 A1**

(12) **EUROPÄISCHE PATENTANMELDUNG**

(43) Veröffentlichungstag:
    **15.03.2023 Patentblatt 2023/11**

(21) Anmeldenummer: **22190919.5**

(22) Anmeldetag: **18.08.2022**

(51) Internationale Patentklassifikation (IPC):
    **B01D 53/06** (2006.01)    **B01D 53/26** (2006.01)
    **F26B 21/08** (2006.01)    **B01D 53/04** (2006.01)

(52) Gemeinsame Patentklassifikation (CPC):
    **B01D 53/06; B01D 53/26; B01D 53/261;**
    **F26B 21/08;** B01D 53/0454; B01D 2259/40007

(84) Benannte Vertragsstaaten:
    **AL AT BE BG CH CY CZ DE DK EE ES FI FR GB
    GR HR HU IE IS IT LI LT LU LV MC MK MT NL NO
    PL PT RO RS SE SI SK SM TR**
    Benannte Erstreckungsstaaten:
    **BA ME**
    Benannte Validierungsstaaten:
    **KH MA MD TN**

(30) Priorität: **09.09.2021 DE 102021209959**

(71) Anmelder: **Glatt Gesellschaft mit beschränkter
    Haftung
    79589 Binzen (DE)**

(72) Erfinder: **Thies, Jochen
    79540 Lörrach (DE)**

(74) Vertreter: **Patentanwälte Magenbauer & Kollegen
    Partnerschaft mbB
    Plochinger Straße 109
    73730 Esslingen (DE)**

(54) **PROZESSGASAUFBEREITUNGSEINRICHTUNG UND VERFAHREN ZUR AUFBEREITUNG VON PROZESSGAS**

(57) Die Erfindung betrifft eine Prozessgasaufbereitungseinrichtung (1) für ein Prozessgas (2) zur Behandlung eines Prozessgutes in einem Prozessapparat (3) und ein Verfahren zur Aufbereitung von Prozessgas (2) zur Behandlung eines Prozessgutes in einem Prozessapparat (3) während einer Trocknungsphase und einer Abkühlphase.

Fig. 6

**Beschreibung**

Die Erfindung betrifft eine Prozessgasaufbereitungseinrichtung für ein Prozessgas zur Behandlung eines Prozessgutes in einem Prozessapparat, mit einem Prozessgaseinlass und einem mit dem Prozessapparat fluidisch verbundenen Prozessgasauslass, wobei das Prozessgas auf einer sich vom Prozessgaseinlass zum Prozessgasauslass erstreckenden Aufbereitungsstrecke strömt, mit einer in Strömungsrichtung des Prozessgases als Einrichtungskomponente ausgebildeten Prozessgasentfeuchtungseinrichtung und einer stromab der Prozessgasentfeuchtungseinrichtung angeordneten, als Einrichtungskomponente ausgebildeten Prozessgastemperiereinrichtung, wobei die Prozessgasentfeuchtungseinrichtung über einen Entfeuchtungseinrichtungseinlass und einen Entfeuchtungseinrichtungsauslass und die Prozessgastemperiereinrichtung über einen Temperiereinrichtungseinlass und einen Temperiereinrichtungsauslass verfügt, und wobei die Prozessgastemperiereinrichtung eine einen Temperiereinheitseinlass und einen Temperiereinheitsauslass verfügende, als Einrichtungskomponente ausgebildete Temperiereinheit für das Prozessgas, eine einen Kühleinheitseinlass und einen Kühleinheitsauslass verfügende, als Einrichtungskomponente ausgebildete Kühleinheit für das Prozessgas und eine über einen Bypasseinlass und einen Bypassauslass verfügende, parallel zur Temperiereinheit geschaltete, als Einrichtungskomponente ausgebildete Bypasseinheit aufweist, wobei an der Bypasseinheit eine als Einrichtungskomponente ausgebildete Ventilanordnung zum wahlweisen Durchströmen der Temperiereinheit oder der Bypasseinheit angeordnet ist, und mit einer über einen Relativfeuchte-Sensor zur Messung der relativen Feuchte des Prozessgases verfügende erste Messeinrichtung, wobei die erste Messeinrichtung stromab der Prozessgasentfeuchtungseinrichtung angeordnet ist und mit einer Steuerungseinrichtung.

Ferner betrifft die Erfindung ein Verfahren zur Aufbereitung von Prozessgas zur Behandlung eines Prozessgutes in einem Prozessapparat während einer Trocknungsphase und einer Abkühlphase aufweisend eine Prozessgasaufbereitungseinrichtung, mit einem Prozessgaseinlass und einem mit dem Prozessapparat fluidisch verbundenen Prozessgasauslass, wobei das Prozessgas auf einer sich vom Prozessgaseinlass zum Prozessgasauslass erstreckenden Aufbereitungsstrecke strömt, mit einer in Strömungsrichtung des Prozessgases als Einrichtungskomponente ausgebildeten Prozessgasentfeuchtungseinrichtung und einer stromab der Prozessgasentfeuchtungseinrichtung angeordneten, als Einrichtungskomponente ausgebildeten Prozessgastemperiereinrichtung, wobei die Prozessgasentfeuchtungseinrichtung über einen Entfeuchtungseinrichtungseinlass und einen Entfeuchtungseinrichtungsauslass und die Prozessgastemperiereinrichtung über einen Temperiereinrichtungseinlass und einen Temperiereinrichtungsauslass verfügt, und wobei die Prozessgastemperiereinrichtung eine einen Temperiereinheitseinlass und einen Temperiereinheitsauslass verfügende, als Einrichtungskomponente ausgebildete Temperiereinheit für das Prozessgas, eine einen Kühleinheitseinlass und einen Kühleinheitsauslass verfügende, als Einrichtungskomponente ausgebildete Kühleinheit für das Prozessgas und eine über einen Bypasseinlass und einen Bypassauslass verfügende, parallel zur Temperiereinheit geschaltete, als Einrichtungskomponente ausgebildete Bypasseinheit aufweist, wobei an der Bypasseinheit eine als Einrichtungskomponente ausgebildete Ventilanordnung zum wahlweisen Durchströmen der Temperiereinheit oder der Bypasseinheit angeordnet ist, und mit einer über einen Relativfeuchte-Sensor zur Messung der relativen Feuchte des Prozessgases verfügende erste Messeinrichtung, wobei die erste Messeinrichtung stromab der Prozessgasentfeuchtungseinrichtung angeordnet ist und mit einer Steuerungseinrichtung.

Prozessgasaufbereitungseinrichtungen sind bekannt, weisen jedoch neben einem hohen Energieverbrauch auch lange Abkühlzeiten für das Prozessgas auf.

Aufgabe der Erfindung ist es daher eine Prozessgasaufbereitungseinrichtung und ein Verfahren zur Aufbereitung von Prozessgas bereitzustellen, um die Nachteile von bekannten Prozessgasaufbereitungseinrichtungen, insbesondere den hohen Energieverbrauch und die langen Abkühlzeiten für das Prozessgas, zu minimieren.

Diese Aufgabe wird bei einer Prozessgasaufbereitungseinrichtung der eingangs genannten Art dadurch gelöst, dass die Kühleinheit ein Bestandteil der Bypasseinheit ist. Eine solche Prozessgasaufbereitungseinrichtung weist neben dem Vorteil eines deutlich reduzierten Energieverbrauchs während der Trocknungsphase und der Abkühlphase des Prozessgutes zusätzlich auch den Vorteil auf, dass die Abkühlzeiten für das Prozessgas, das insbesondere als Umgebungsluft ausgebildet ist, in der sich an die Trocknungsphase anschließenden Abkühlphase des Prozessgutes durch die Anordnung der Kühleinheit in der Bypasseinheit verkürzt werden. Nach der Trocknungsphase des Prozessgutes beginnt eine Abkühlphase des Prozessgutes. Die Abkühlphase ist notwendig, um ein "Ausschwitzen" von Feuchtigkeit, insbesondere in Form von Wasser, aus dem behandelten Prozessgut zu vermeiden, da diese Feuchtigkeit ansonsten kondensieren und zu einer unerwünschten Agglomeration des Prozessgutes im Prozessapparat führen kann. In den bekannten Prozessgasaufbereitungseinrichtungen erfolgt eine Kühlung des Prozessgases stromauf oder stromab der Prozessgastemperiereinrichtung. Im Falle einer stromauf oder stromab der Prozessgastemperiereinrichtung erfolgenden Kühlung des Prozessgases, werden auch in der Abkühlphase alle Einrichtungskomponenten durchströmt und somit zeitlich vor dem Prozessgut abgekühlt, was z. B. aufgrund der trägen Masse der verbauten Einrichtungskomponenten sehr energie- und zeitaufwändig ist.

In einer diesbezüglichen Weiterbildung der Prozessgasaufbereitungseinrichtung weist die Prozessgasaufbereitungseinrichtung einen als Einrichtungskomponente ausgebildeten Prozessapparat auf, der zweckmäßigerweise als Fluidisierungsapparat oder als Beschichtungsapparat ausgebildet ist. Fluidisierungsapparate sind bspw. als Wirbel- oder Strahlschichtapparate ausgebildet. Beschichtungsapparate sind bspw. Coater, insbesondere Trommelcoater.

Bevorzugt weist die Prozessgasaufbereitungseinrichtung eine als Einrichtungskomponente ausgebildete Prozessgasfördereinrichtung auf. Der Vorteil einer solchen Ausgestaltung der Prozessgasaufbereitungseinrichtung ist, dass das Prozessgas einstellbar von der Prozessgasfördereinrichtung, insbesondere einem Gebläse, einer Vakuumpumpe oder dergleichen, auf der Ausbereitungsstrecke gefördert wird. Diesbezüglich ist die Prozessgasfördereinrichtung zweckmäßigerweise stromauf und/oder stromab des Prozessapparates angeordnet.

Nach einer weiteren Fortbildung der Prozessgasaufbereitungseinrichtung weist die Prozessgasentfeuchtungseinrichtung eine über einen Kondensationsentfeuchtungseinheitseinlass und einen Kondensationsentfeuchtungseinheitsauslass verfügende, als Einrichtungskomponente ausgebildete Kondensationsentfeuchtungseinheit und/oder eine über einen Adsorptionsentfeuchtungseinheitseinlass und einen Adsorptionsentfeuchtungseinheitsauslass verfügende, als Einrichtungskomponente ausgebildete Adsorptionsentfeuchtungseinheit auf. Vorteilhafterweise sind Kondensationsentfeuchtungseinheit und Adsorptionsentfeuchtungseinheit beide geeignet, das Prozessgas zu entfeuchten, wobei durch die Verwendung von Kondensationsentfeuchtungseinheit und Adsorptionsentfeuchtungseinheit in der Prozessgasentfeuchtungseinrichtung eine verbesserte und zielgenau einstellbare Entfeuchtung des Prozessgases ermöglicht wird. Die beiden Einrichtungskomponenten oder deren Kombination werden in Abhängigkeit der dem Prozessgas zu entziehenden Feuchtigkeitsmenge eingesetzt.

Zweckmäßigerweise ist die Kondensationsentfeuchtungseinheit als fluidgekühlter Kondensator ausgebildet, wobei als Fluid insbesondere Kühlwasser verwendet wird, bspw. aus einem naheliegenden Gewässer der Umgebung. Die als Kondensator ausgebildete Kondensationsentfeuchtungseinheit ist bevorzugt so dimensioniert, um unter Verwendung von Kühlwasser das Prozessgas auf etwa 8 °C abzukühlen. Hierdurch nimmt die relative Feuchte des Prozessgases ab, wodurch dieses getrocknet wird.

Die als Kondensator ausgebildete Kondensationsentfeuchtungseinheit ist für den Großteil der Verfahren zur Aufbereitung von Prozessgas ausreichend dimensioniert.

Für den Fall, dass die Prozessgasentfeuchtungseinrichtung über eine Kondensationsentfeuchtungseinheit und über eine Adsorptionsentfeuchtungseinheit verfügt, ist zweckmäßigerweise auf der Aufbereitungsstrecke die Kondensationsentfeuchtungseinheit stromauf der Adsorptionsentfeuchtungseinheit angeordnet ist. Hierdurch ist durch die Adsorptionsentfeuchtungseinheit die relative Feuchte des Prozessgases nach dem Durchströmen der Kondensationsentfeuchtungseinheit zielgenau einstellbar, wobei die Adsorptionsentfeuchtungseinheit bevorzugt als Trocknungsrad ausgebildet ist.

Insbesondere verfügt die Adsorptionsentfeuchtungseinheit über eine einen Regenerationseinheitseinlass und einen Regenerationseinheitsauslass aufweisende, als Einrichtungskomponente ausgebildete Regenerationseinheit, wobei ein Regenerationsgas von einer einen Regenerationsgasfördereinrichtungseinlass und einen Regenerationsgasfördereinrichtungsauslass aufweisenden, als Einrichtungskomponente ausgebildeten Regenerationsgasfördereinrichtung auf einer sich vom Regenerationseinheitseinlass zum Regenerationseinheitsauslass erstreckenden Regenerationsstrecke gefördert wird und in Strömungsrichtung des Regenerationsgases eine einen Regenerationsgasheizeinrichtungseinlass und Regenerationsgasheizeinrichtungsauslass aufweisende, als Einrichtungskomponente ausgebildete Regenerationsgasheizeinrichtung und die einen Regenerationsgaseinlass und einen Regenerationsgasauslass aufweisende Adsorptionsentfeuchtungseinheit durchströmt. Zweckmäßigerweise erfolgt eine Warmregeneration der Adsorptionsentfeuchtungseinheit. Bei der Warmregeneration wird für die Regeneration eines Trockenmittels der Adsorptionsentfeuchtungseinheit das Regenerationsgas auf eine Temperatur von bspw. 160 °C oder höher erhitzt und durch die zu regenerierende Adsorptionsentfeuchtungseinheit geführt. Das heiße Regenerationsgas entzieht dem Trockenmittel die aus dem Prozessgas aufgenommene Feuchtigkeit und gibt diese bevorzugt am Regenerationseinheitsauslass zweckmäßigerweise an die Umgebung ab. Diesbezüglich bevorzugt ist die Regenerationsstrecke als geschlossener Kreislauf ausgebildet. Dementsprechend weist ein solcher geschlossener Kreislauf den Vorteil auf, dass eine Regeneration der Adsorptionsentfeuchtungseinheit unabhängig von den Umgebungsbedingungen erfolgen kann, d. h. bspw. ohne angesaugte Umgebungsluft.

Gemäß einer weiteren Ausgestaltung der Prozessgasaufbereitungseinrichtung weist die Prozessgasentfeuchtungseinrichtung eine über einen Vorheizeinheitseinlass und einen Vorheizeinheitsauslass verfügende, als Einrichtungskomponente ausgebildete Vorheizeinheit auf, die zweckmäßigerweise stromauf der Kondensationsentfeuchtungseinheit und/oder der Adsorptionsentfeuchtungseinheit angeordnet ist. Die Vorheizeinheit wird insbesondere als "Frostschutzheizung" für die Kondensationsentfeuchtungseinheit eingesetzt. Im Falle, dass die Regenerationsstrecke als geschlossener Kreislauf ausgebildet ist, wird in der Vorheizeinheit die bei der Regeneration der Adsorptionsentfeuchtungseinheit aufgenommene Feuchtigkeit aus dem Regenerationsgas auskondensiert.

Besonders bevorzugt ist die Vorheizeinheit ferner auch der Regenerationseinheit zugeordnet, wobei die Vorheizeinheit auf der als geschlossener Kreislauf ausgebildeten Regenerationsstrecke stromauf der Regenerationsgasheizeinrichtung und stromab der Regenerationsgasfördereinrichtung angeordnet ist, wodurch das Prozessgas beim Durchströmen der Vorheizeinheit erwärmt und das Regenerationsgas beim Durchströmen der Vorheizeinheit abgekühlt wird. Die Integration der als Wärmequelle ausgebildeten Vorheizeinheit erhöht die Wirtschaftlichkeit der Trocknung des Prozessgases zusätzlich.

Darüber hinaus bevorzugt ist die Regenerationsgasfördereinrichtung auf der Regenerationsstrecke stromab der Adsorptionsentfeuchtungseinheit angeordnet. Durch diese Anordnung der Regenerationsgasfördereinrichtung wird ein auf der Regenerationstrecke bevorzugter Unterdruck erzeugt.

Weiter bevorzugt ist die erste Messeinrichtung stromauf der Prozessgastemperiereinrichtung angeordnet. Vorteilhafterweise wird mittels der ersten Messeinrichtung die relative Feuchte im Prozessgas gemessen und als Sensorsignal an die Steuerungseinrichtung übermittelt.

Die Feuchte bezeichnet den Anteil des Wasserdampfes im Prozessgas, flüssiges Wasser (z. B. Regen, Tau) zählt dabei nicht. Die relative Feuchte gibt den Anteil der höchstmöglichen Sättigung an, wobei 100 % bedeutet, dass nicht mehr Wasserdampf im Prozessgas aufgenommen werden kann. Die absolute Feuchte gibt die Masse des Wasserdampfes pro Kubikmeter Prozessgas an. Je höher die Temperatur ist, desto mehr Wasserdampf kann das Prozessgas, insbesondere Luft, aufnehmen.

Die relative Feuchte lässt sich unter Verwendung von Näherungsformeln in die absolute Feuchte umrechnen. Hierzu gibt es verschiedene Näherungsformeln, die in der Literatur bekannt sind. Eine "einfache" Näherungsformel für die Berechnung der absoluten Feuchte f in der Einheit g/m$^3$ aus der relativen Feuchte und der Temperatur

$$f = \frac{6{,}112 \cdot e^{\frac{(17{,}67 \times T)}{(T+243{,}5)}} \cdot rh \cdot 18{,}02}{(273{,}15 + T) \cdot 100 \cdot 0{,}08314}$$

erreicht im Temperaturbereich von -30 °C und 35 °C und normalem atmosphärischen Luftdruck eine Genauigkeit mit einer Abweichung von maximal 0,1 %, wobei in der Formel die Temperatur T in Grad Celsius, die relative Luftfeuchtigkeit rh in % angegeben wird und e die Basis des natürlichen Logarithmus 2,71828 ist. Je stärker die Temperatur von dem vorgenannten Temperaturbereich abweicht, desto ungenauer wird das Ergebnis der Umrechnung.

Für die Umrechnung der relativen Feuchte in die absolute Feuchte wird die Temperatur des Prozessgases benötigt. Deshalb verfügt die erste Messeinrichtung ferner über einen Temperatursensor zur Messung der Temperatur des Prozessgases. Zweckmäßigerweise wird auch die Temperatur des Prozessgases gemessen und als Sensorsignal an die Steuerungseinrichtung übermittelt.

Bevorzugt sind der Relativfeuchte-Sensor und der Temperatursensor der ersten Messeinrichtung als bauliche Einheit ausgebildet.

Mittels der zweckmäßigerweise als Sensorsignal an die Steuerungseinrichtung übermittelten Temperatur und der relativen Feuchte des Prozessgases wird die Berechnung der absoluten Feuchte, die unabhängig von der Temperatur ist, ermöglicht. Die Umrechnung in den Absolutfeuchte-Istwert in der ersten Messeinrichtung oder in der Steuerungseinrichtung.

Nach einer anderen Weiterbildung der Prozessgasaufbereitungseinrichtung weist die Temperiereinheit eine über einen Heizeinrichtungseinlass und einen Heizeinrichtungsauslass verfügende, als Einrichtungskomponente ausgebildete Heizeinrichtung auf. Die Heizeinrichtung ist vorteilhafterweise geeignet, das Prozessgas in der Trocknungsphase der Behandlung des Prozessgutes durch Kühlen oder Erwärmen aufzubereiten. Hierdurch ist eine im Bereich von 5 °C bis 250 °C beliebige Temperatur des Prozessgases, insbesondere in Form von Umgebungsluft, einstellbar.

Entsprechend einer zusätzlichen Fortbildung der Prozessgasaufbereitungseinrichtung ist die Prozessgasfördereinrichtung stromab der Prozessgasentfeuchtungseinrichtung und stromauf der Prozessgastemperiereinrichtung angeordnet. Durch diese Anordnung der Prozessgasfördereinrichtung stromab der Prozessgasentfeuchtungseinrichtung wird ein auf der Aufbereitungsstrecke bevorzugter Unterdruck erzeugt.

Ferner ist in einer Weiterbildung der Prozessgasaufbereitungseinrichtung stromauf der Prozessgasentfeuchtungseinrichtung eine über einen Relativfeuchte-Sensor zur Messung der relativen Feuchte des Prozessgases verfügende zweite Messeinrichtung angeordnet. Vorteilhafterweise wird mittels der zweiten Messeinrichtung die relative Feuchte im Prozessgas am Prozessgaseinlass gemessen und als Sensorsignal an die Steuerungseinrichtung übermittelt. Hierdurch wird eine Regelung und/oder Steuerung jeder einzelnen Einrichtungskomponente unabhängig von den anderen Einrichtungskomponenten ermöglicht.

Für die Umrechnung der relativen Feuchte in die absolute Feuchte wird die Temperatur des Prozessgases benötigt. Deshalb verfügt die zweite Messeinrichtung ferner über einen Temperatursensor zur Messung der Temperatur des Prozessgases. Insbesondere wird auch an der zweiten Messeinrichtung gemessene Temperatur des Prozessgases als Sensorsignal an die Steuerungseinrichtung übermittelt.

Auch der Relativfeuchte-Sensor und der Temperatursensor der zweiten Messeinrichtung sind zweckmäßigerweise als bauliche Einheit ausgebildet.

Die an der zweiten Messeinrichtung gemessene Temperatur und relative Feuchte werden zur Regelung und/oder Steuerung der einzelnen Einrichtungskomponenten in Form der Ab- und/oder Zuschaltung dieser verwendet. Insbesondere die Kondensationsentfeuchtungseinheit, die Adsorptionsentfeuchtungseinheit, die Vorheizeinheit und/oder die Befeuchtungseinrichtung werden so entsprechend geregelt und/oder gesteuert. Überraschenderweise wird durch diese zeitgemäße, innovative und proaktive Regelungstechnik eine enorme Energieeinsparung bewirkt sowie eine verbesserte Aufbereitung des Prozessgases erzielt.

In einer weiteren Ausgestaltung der Prozessgasaufbereitungseinrichtung weist diese bevorzugt eine insbesondere stromab der Prozessgasentfeuchtungseinrichtung und stromauf der Prozessgastemperiereinrichtung angeordnete, als Einrichtungskomponente ausgebildete Befeuchtungseinrichtung auf, die über einen Befeuchtungseinrichtungseinlass und einen Befeuchtungseinrichtungsauslass verfügt. Durch die Befeuchtungseinrichtung ist es möglich das Prozessgas zu befeuchten und auch Feuchten des Prozessgases einzustellen, die betragsmäßig höher sind als die Feuchten des am Prozessgaseinlass in die Prozessgasaufbereitungseinrichtung eintretenden Prozessgases. Hierzu wird das Prozessgas von der Vorheizeinheit auf eine Temperatur erwärmt, die dem Prozessgas die Aufnahme der Feuchtigkeit ermöglicht.

Darüber hinaus wird die Aufgabe bei einem Verfahren der eingangs genannten Art dadurch gelöst, dass die Kühleinheit ein Bestandteil der Bypasseinheit ist und wobei bei der Behandlung des Prozessgutes im Prozessapparat in der Trocknungsphase die Temperiereinheit durchströmt wird und in der Abkühlphase die über die Kühleinheit verfügende Bypasseinheit durchströmt wird. Ein derart ausgestaltetes Verfahren zur Aufbereitung von Prozessgas in einer Prozessgasaufbereitungseinrichtung weist neben dem Vorteil eines deutlich reduzierten Energieverbrauchs während der Trocknungsphase und der Abkühlphase des Prozessgutes zusätzlich auch den Vorteil auf, dass die Abkühlzeiten für das Prozessgas, das insbesondere als Umgebungsluft ausgebildet ist, in der sich an die Trocknungsphase anschließenden Abkühlphase des Prozessgutes durch die Anordnung der Kühleinheit in der Bypasseinheit verkürzt werden. Nach der Trocknungsphase des Prozessgutes beginnt eine Abkühlphase des Prozessgutes. Die Abkühlphase ist notwendig, um ein "Ausschwitzen" von Feuchtigkeit, insbesondere in Form von Wasser, aus dem behandelten Prozessgut zu vermeiden, da diese Feuchtigkeit ansonsten kondensieren und zu einer unerwünschten Agglomeration des Prozessgutes im Prozessapparat führen kann In den bekannten Prozessgasaufbereitungseinrichtungen erfolgt eine Kühlung des Prozessgases stromauf oder stromab der Prozessgastemperiereinrichtung. Im Falle einer stromauf oder stromab der Prozessgastemperiereinrichtung erfolgenden Kühlung des Prozessgases, werden auch in der Abkühlphase alle Einrichtungskomponenten durchströmt und somit zeitlich vor dem Prozessgut abgekühlt, was z. B. aufgrund der trägen Masse der verbauten Einrichtungskomponenten sehr energie- und zeitaufwändig ist. Durch das Verfahren wird in der Abkühlphase die Prozessgastemperiereinrichtung nicht durchströmt, wodurch das Verfahren deutlich energieeffizienter ist als bereits bekannte Verfahren.

Entsprechend einer weiter vorteilhaften Ausgestaltung des Verfahrens wird die Feuchte des durch die Prozessgasaufbereitungseinrichtung strömenden Prozessgases geregelt, insbesondere zumindest während der Trocknungsphase. Die Feuchte des Prozessgases kann sowohl mittels der relativen Feuchte als auch mittels der absoluten Feuchte geregelt werden, wobei bevorzugt mittels der absoluten Feuchte geregelt wird, da die absolute Feuchte im Unterschied zur relativen Feuchte unabhängig von der Temperatur des Prozessgases ist.

Bevorzugt weist hierzu die erste Messeinrichtung einen Temperatursensor zur Messung der Temperatur des Prozessgases auf, und in der Steuerungseinrichtung erfolgt ein erster Absolutfeuchte-Vergleich zwischen Absolutfeuchte-Sollwert und Absolutfeuchte-Istwert, wobei der Absolutfeuchte-Istwert aus einem von dem Relativfeuchte-Sensor der ersten Messeinrichtung gemessenen Relativfeuchtewert und einem von dem dazugehörigen Temperatursensor gemessenen Temperaturwert bestimmt wird. Die Absolutfeuchte-Istwertbestimmung erfolgt zweckmäßigerweise in der ersten Messeinrichtung oder in der Steuerungseinrichtung. Die Steuerungseinrichtung übermittelt unter Berücksichtigung des ersten Absolutfeuchte-Vergleichs eine Absolutfeuchte-Regelgröße an die Prozessgasentfeuchtungseinrichtung und/oder Befeuchtungseinrichtung, um die absolute Feuchte des Prozessgases zu regeln. Zweckmäßigerweise wird die Feuchte in einem Toleranzbereich von ±3 % des Sollwerts eingeregelt.

Diesbezüglich wird das Prozessgas durch eine insbesondere stromab der Prozessgasentfeuchtungseinrichtung und stromauf der Prozessgastemperiereinrichtung angeordnete Befeuchtungseinrichtung befeuchtet. Durch die Befeuchtungseinrichtung ist es möglich das Prozessgas zu befeuchten und auch Feuchten des Prozessgases einzustellen, die betragsmäßig höher sind als die Feuchte des am Prozessgaseinlass in die Prozessgasaufbereitungseinrichtung eintretenden Prozessgases. Hierzu wird das Prozessgas von der Vorheizeinheit auf eine Temperatur erwärmt, die dem Prozessgas die Aufnahme der Feuchtigkeit ermöglicht. Durch die Befeuchtungseinrichtung wird das Verfahren zur Aufbereitung eines Prozessgases für die Behandlung eines Prozessgutes in einem Prozessapparat, insbesondere eines Fluidisierungsapparates oder eines Beschichtungsapparates, noch flexibler.

Entsprechend einer weiteren Fortbildung des Verfahrens weist die Prozessgasentfeuchtungseinrichtung eine über eine Regenerationseinheit verfügende Adsorptionsentfeuchtungseinheit auf, wobei die Adsorptionsentfeuchtungseinheit durch die Regenerationseinheit zumindest teilweise regeneriert wird. Diesbezüglich weist die Regenerationseinheit eine ein Regenerationsgas erwärmende Regenerationsgasheizeinrichtung auf weist, sodass das Regernationsgas beim Durchströmen der Adsorptionsentfeuchtungseinheit Feuchtigkeit aufnimmt, wodurch die Adsorptionsentfeuchtungseinheit zumindest teilweise getrocknet und dadurch regeneriert wird. Die Adsorptionsentfeuchtungseinheit entfeuchtet das Prozessgas - egal, ob eine Kondensationsentfeuchtungseinheit vorgeschaltet ist oder nicht - so, dass der in der Steuerungseinrichtung hinterlegte Sollwert erreicht wird. Dies erfolgt insbesondere über eine exakte Einstellung der hierfür wichtigen Parameter, wie Temperatur und relative Feuchte des Regenerationsgases. Insbesondere regelt und/oder steuert die Steuerungseinrichtung daher aufgrund des Abgleichs von Istwert und Sollwert die Regenerationsgasheizeinrichtung. Das Regenerationsgas regeneriert die Adsorptionsentfeuchtungseinheit so, dass diese genau die Menge an Feuchtigkeit aufnehmen kann, um das Prozessgas zur Erreichung des in der Steuerungseinrichtung hinterlegten Sollwerts entsprechend zu trocknen. Bevorzugt durchströmt hierbei das Regenerationsgas die Adsorptionsentfeuchtungseinheit im Gegenstrom zum Prozessgas.

Überdies weist die Prozessgasentfeuchtungseinrichtung eine Vorheizeinheit aufweist, die zweckmäßigerweise stromauf der Kondensationsentfeuchtungseinheit angeordnet ist, wobei die Vorheizeinheit das über den Prozessgaseinlass in die Prozessgasaufbereitungseinrichtung eintretende Prozessgas erwärmt, um ein Einfrieren der Kondensationsentfeuchtungseinheit zu verhindern oder das Prozessgas für die Befeuchtung des Prozessgases zu erwärmen. Die Vorheizeinheit wird insbesondere als "Frostschutzheizung" für die Kondensationsentfeuchtungseinheit eingesetzt. Im Falle, dass die Regenerationsstrecke als geschlossener Kreislauf ausgebildet ist, wird in der Vorheizeinheit die bei der Regeneration der Adsorptionsentfeuchtungseinheit aufgenommene Feuchtigkeit aus dem Regenerationsgas auskondensiert.

Nach einer zusätzlichen Weiterbildung des Verfahrens ist jede Einrichtungskomponente der Prozessgasaufbereitungseinrichtung zu- und/oder abschaltbar. Hierzu ist stromauf der Prozessgasentfeuchtungseinrichtung eine über einen Relativfeuchte-Sensor zur Messung der relativen Feuchte des Prozessgases und einen Temperatursensor zur Messung der Temperatur des Prozessgases verfügende zweite Messeinrichtung angeordnet, und in der Steuerungseinrichtung erfolgt ein zweiter Absolutfeuchte-Vergleich zwischen Absolutfeuchte-Sollwert und Absolutfeuchte-Istwert, wobei der Absolutfeuchte-Istwert aus einem von dem Relativfeuchte-Sensor der zweiten Messeinrichtung gemessenen Relativfeuchtewert und einem von dem dazugehörigen Temperatursensor gemessenen Temperaturwert bestimmt wird. Zweckmäßigerweise erfolgt die Absolutfeuchte-Istwertbestimmung in der zweiten Messeinrichtung oder in der Steuerungseinrichtung. Die Steuerungseinrichtung kann hierzu unter Berücksichtigung des zweiten Absolutfeuchte-Vergleichs eine Absolutfeuchte-Regelgröße an jede Einrichtungskomponente übermitteln, um die die jeweilige Einrichtungskomponente der Prozessgasaufbereitungseinrichtung zu- und/oder abzuschalten.

Die Steuerungseinrichtung entscheidet auf der Basis des Absolutfeuchte-Vergleichs welche Einrichtungskomponenten der Prozessgasaufbereitungseinrichtung zur Entfeuchtung des Prozessgases zu- und/oder abgeschaltet werden. Im Folgenden werden Absolutfeuchte-Sollwerte aufgeführt, die in der Praxis beim Betrieb der Prozessgasaufbereitungseinrichtung verwendet werden:

- Entfeuchtung nur über die Kondensationsentfeuchtungseinheit bei einem Absolutfeuchte-Sollwert von größer gleich 8 g/m$^3$; Adsorptionsentfeuchtungseinheit ist bei Vorhandensein abgeschaltet;

- Entfeuchtung nur über die Adsorptionsentfeuchtungseinheit bei einem Absolutfeuchte-Sollwert von kleiner 8 g/m$^3$; Kondensationsentfeuchtungseinheit ist bei Vorhandensein abgeschaltet;

- Entfeuchtung über die Kondensationsentfeuchtungseinheit und über die Adsorptionsentfeuchtungseinheit bei einem Absolutfeuchte-Sollwert von kleiner 8 g/m$^3$ und einer Differenz zwischen Absolutfeuchte-Istwert und Absolutfeuchte-Sollwert von größer gleich 6 g/m$^3$;

- Befeuchtung über die Befeuchtungseinrichtung bei einem Absolutfeuchte-Istwert kleiner als der Absolutfeuchte-Sollwert.

Der vorgenannte Absolutfeuchte-Sollwert ist ein auf Erfahrung basierender Wert, der auch von dem vorgenannten Absolutfeuchte-Sollwert abweichen kann.

Die Prozessgasaufbereitungseinrichtung weist eine als Einrichtungskomponente ausgebildete Prozessgasfördereinrichtung auf, die das Prozessgas auf einer sich vom Prozessgaseinlass zum Prozessgasauslass erstreckenden Aufbereitungsstrecke fördert. Der Vorteil einer solchen Ausgestaltung des Verfahrens ist, dass der Prozessgas einstellbar von der Prozessgasfördereinrichtung, insbesondere einem Gebläse, einer Vakuumpumpe oder dergleichen, auf der Ausbereitungsstrecke gefördert wird.

Nachfolgend wird die Erfindung anhand der beiliegenden Zeichnung näher erläutert und in dieser zeigen

Figur 1     eine erste Ausführungsform einer Prozessgasaufbereitungseinrichtung,

Figur 2     eine zweite Ausführungsform einer Prozessgasaufbereitungseinrichtung,

Figur 3   eine dritte Ausführungsform einer Prozessgasaufbereitungseinrichtung,

Figur 4   eine vierte Ausführungsform einer Prozessgasaufbereitungseinrichtung,

Figur 5   eine fünfte Ausführungsform einer Prozessgasaufbereitungseinrichtung,

Figur 6   eine sechste Ausführungsform einer Prozessgasaufbereitungseinrichtung und

Figur 7   eine siebte Ausführungsform einer Prozessgasaufbereitungseinrichtung.

Sofern keine anderslautenden Angaben gemacht werden, bezieht sich die nachfolgende Beschreibung auf sämtliche in der Zeichnung illustrierten Ausführungsformen einer bevorzugten Prozessgasaufbereitungseinrichtung 1 für ein Prozessgas 2 zur Behandlung eines Prozessgutes in einem Prozessapparat 3 und ein entsprechendes Verfahren zur Aufbereitung von Prozessgas 2 zur Behandlung eines Prozessgutes in einem Prozessapparat 3. Hierbei weist die Prozessgasaufbereitungseinrichtung 1 den als Einrichtungskomponente 4 ausgebildeten Prozessapparat 3 zweckmäßigerweise auf, der insbesondere als Fluidisierungsapparat 5 oder als Beschichtungsapparat 6 ausgebildet ist.

Die Prozessgasaufbereitungseinrichtung 1 verfügt über einen Prozessgaseinlass 7 und einen mit dem einen Prozessapparateeinlass 8 und einen Prozessapparateauslass 9 aufweisenden Prozessapparat 3 fluidisch verbundenen Prozessgasauslass 10. Bevorzugt sind Prozessgaseinlass 7 und Prozessgasauslass 10 als Anschlussstutzen ausgebildet, an denen jeweils zu- oder weiterführende, zweckmäßigerweise als Rohrleitung ausgebildete Kanalabschnitte 11 anordenbar oder angeordnet sind. Zur besseren Unterscheidbarkeit jeweils gleicher Gegenstände werden diese nachfolgend am Bezugszeichen mit a, b, c usw. gekennzeichnet, bspw. bei Kanalabschnitt 11a, 11b, 11c.

Das Prozessgas 2 wird von einer als Einrichtungskomponente 4 ausgebildeten Prozessgasfördereinrichtung 12 auf einer sich vom Prozessgaseinlass 7 zum Prozessgasauslass 10 erstreckenden Aufbereitungsstrecke 13 gefördert. Die einen Prozessgasfördereinrichtungseinlass 14 und einen Prozessgasfördereinrichtungsauslass 15 aufweisende Prozessgasfördereinrichtung 12 ist dabei zweckmäßigerweise als Vakuumpumpe 16 oder als Gebläse 17 ausgebildet. Bevorzugt sind Prozessgasfördereinrichtungseinlass 14 und Prozessgasfördereinrichtungsauslass 15 als Anschlussstutzen ausgebildet, an denen jeweils zuoder weiterführende Kanalabschnitte 11 anordenbar oder angeordnet sind, wobei die Kanalabschnitte 11 insbesondere als Rohrleitungen ausgebildet sind.

Die Prozessgasaufbereitungseinrichtung 1 weist in Strömungsrichtung des Prozessgases 2 eine als Einrichtungskomponente 4 ausgebildete Prozessgasentfeuchtungseinrichtung 18 und eine stromab der Prozessgasentfeuchtungseinrichtung 18 angeordnete, als Einrichtungskomponente 4 ausgebildete Prozessgastemperiereinrichtung 19 auf. Bevorzugt ist die Prozessgasfördereinrichtung 12 stromab der Prozessgasentfeuchtungseinrichtung 18 und stromauf der Prozessgastemperiereinrichtung 19 angeordnet.

Die Prozessgasentfeuchtungseinrichtung 18 verfügt über einen Entfeuchtungseinrichtungseinlass 20 und einen Entfeuchtungseinrichtungsauslass 21 und die Prozessgastemperiereinrichtung 19 über einen Temperiereinrichtungseinlass 22 und einen Temperiereinrichtungsauslass 23. Bevorzugt sind Entfeuchtungseinrichtungseinlass 20, Entfeuchtungseinrichtungsauslass 21, Temperiereinrichtungseinlass 22 und Temperiereinrichtungsauslass 23 auch als Anschlussstutzen ausgebildet, an denen jeweils zu- oder weiterführende Kanalabschnitte 11, insbesondere in Form von Rohrleitungen, anordenbar oder angeordnet sind. Vorteilhafterweise kann die Prozessgasentfeuchtungseinrichtung 18 eine zielgenau einstellbare Entfeuchtung des Prozessgases 2 ermöglichen.

Hierbei weist die Prozessgasentfeuchtungseinrichtung 18 eine über einen Kondensationsentfeuchtungseinheitseinlass 24 und einen Kondensationsentfeuchtungseinheitsauslass 25 verfügende, als Einrichtungskomponente 4 ausgebildete Kondensationsentfeuchtungseinheit 26 und/oder eine über einen Adsorptionsentfeuchtungseinheitseinlass 27 und einen Adsorptionsentfeuchtungseinheitsauslass 28 verfügende, als Einrichtungskomponente 4 ausgebildete Adsorptionsentfeuchtungseinheit 29 auf. Bevorzugt sind Kondensationsentfeuchtungseinheitseinlass 24 und Kondensationsentfeuchtungseinheitsauslass 25 sowie Adsorptionsentfeuchtungseinheitseinlass 27 und Adsorptionsentfeuchtungseinheitsauslass 28 als Anschlussstutzen ausgebildet, an denen jeweils zu- oder weiterführende, zweckmäßigerweise als Rohrleitung ausgebildete Kanalabschnitte 11 anordenbar oder angeordnet sind.

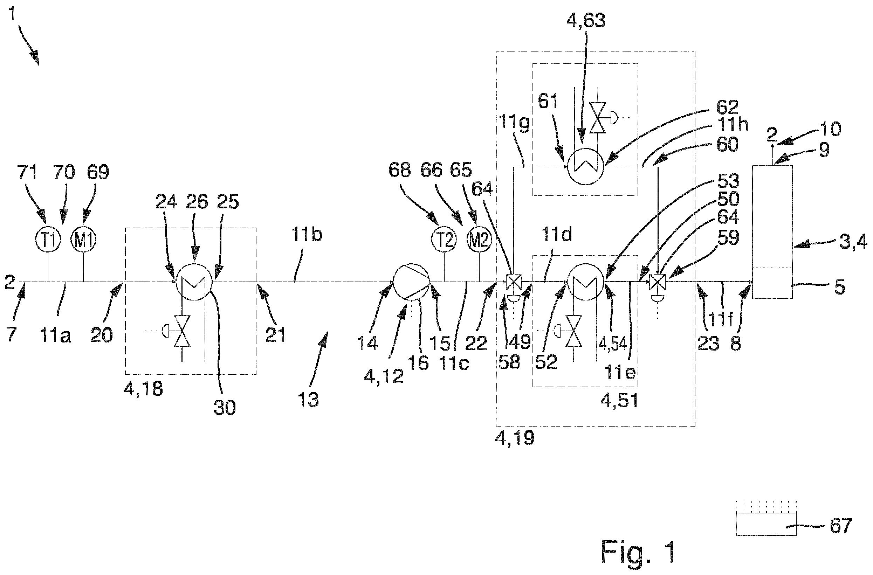

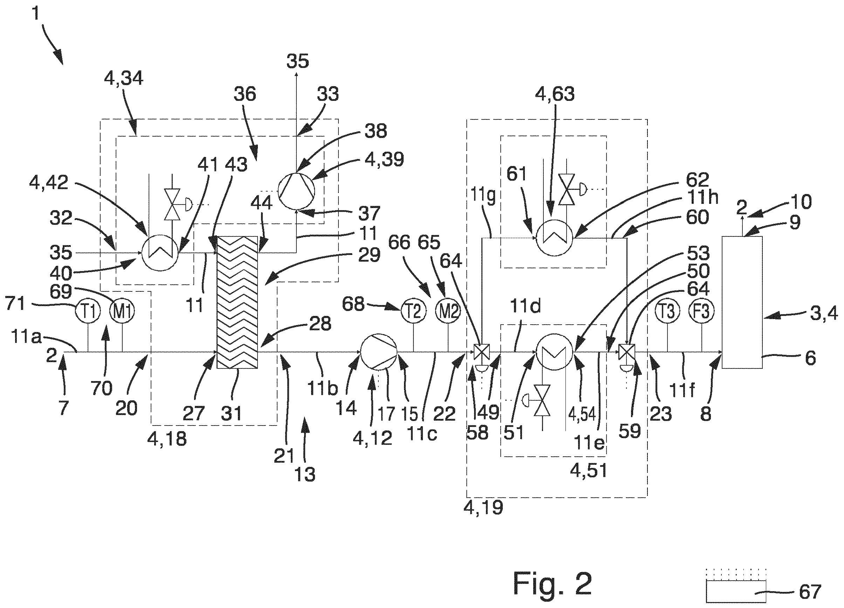

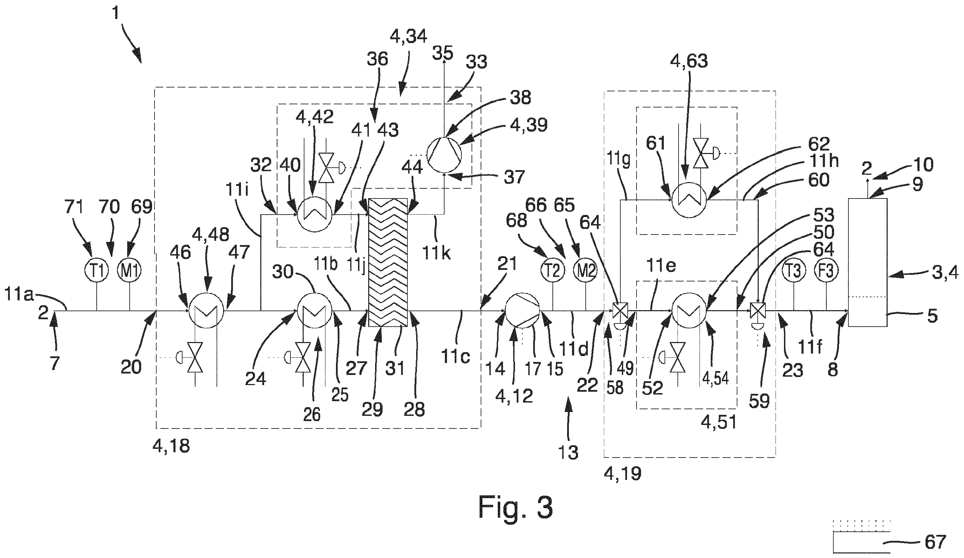

Außer in der in Fig. 1 dargestellten ersten Ausführungsform der Prozessgasaufbereitungseinrichtung 1, in der die Prozessgasentfeuchtungseinrichtung 18 nur die Kondensationsentfeuchtungseinheit 26 aufweist, und in der in Fig. 2 gezeigten Ausführungsform, in der die Prozessgasentfeuchtungseinrichtung 18 nur die Adsorptionsentfeuchtungseinheit 29 aufweist, verfügt die Prozessgasentfeuchtungseinrichtung 18 in allen anderen in den Fign. 3 bis 7 gezeigten Ausführungsformen jeweils über die Kondensationsentfeuchtungseinheit 26 und die auf der Aufbereitungsstrecke 13 stromab der Kondensationsentfeuchtungseinheit 26 angeordnete Adsorptionsentfeuchtungseinheit 29. Bevorzugt ist die Kondensationsentfeuchtungseinheit 26 als fluidgekühlter Kondensator 30 und die Adsorptionsentfeuchtungseinheit 29 als Trocknungsrad 31 ausgebildet.

Bei dem fluidgekühlten Kondensator 30 wird als Fluid insbesondere Kühlwasser verwendet. Der Kondensator 30 ist dabei insbesondere so dimensioniert, um unter Verwendung von Kühlwasser das Prozessgas 2 auf etwa 8 °C abzukühlen, wodurch die Feuchte des Prozessgases 2 abnimmt. Ein solcher Kondensator ist für den Großteil der durchgeführten Verfahren zur Aufbereitung von Prozessgas 2 ausreichend dimensioniert. Die Abkühlung des Prozessgases 2 kann auch auf eine andere Temperatur erfolgen. Die vorgenannten 8 °C ist ein Erfahrungswert bei der Verwendung von Kühlwasser aus dem Kühlwassernetz von Betreibern einer Prozessgasaufbereitungseinrichtung 1.

Die in der Fig. 2 dargestellte Ausführungsform zeigt eine als Prozessentfeuchtungseinrichtung 18 ausgebildete Adsorptionsentfeuchtungseinheit 29 in Form eines Trocknungsrades 31. Durch die als Trocknungsrad 31 ausgebildete Adsorptionsentfeuchtungseinheit 29 ist die Feuchte des Prozessgases 2 zielgenau einstellbar.

Auch in den Ausführungsformen der Fign. 3 bis 6 ist durch die als Trocknungsrad 31 ausgebildete Adsorptionsentfeuchtungseinheit 29 die Feuchte des Prozessgases 2 zielgenau einstellbar. Die Adsorptionsentfeuchtungseinheit 29 verfügt hierzu in den in den Fign. 2 bis 6 gezeigten Ausführungsformen über eine einen Regenerationseinheitseinlass 32 und einen Regenerationseinheitsauslass 33 aufweisende, als Einrichtungskomponente 4 ausgebildete Regenerationseinheit 34. Bevorzugt sind Regenerationseinheitseinlass 32 und Regenerationseinheitsauslass 33 als Anschlussstutzen ausgebildet, an denen jeweils zu- oder weiterführende, zweckmäßigerweise als Rohrleitung ausgebildete Kanalabschnitte 11 anordenbar oder angeordnet sind.

Für die Regeneration der Adsorptionsentfeuchtungseinheit 29, insbesondere des Trocknungsrades 31, wird ein Regenerationsgas 35 auf einer sich von dem Regenerationseinheitseinlass 32 zu dem Regenerationseinheitsauslass 33 erstreckenden Regenerationsstrecke 36 von einer einen Regenerationsgasfördereinrichtungseinlass 37 und einen Regenerationsgasfördereinrichtungsauslass 38 aufweisenden, als Einrichtungskomponente 4 ausgebildeten Regenerationsgasfördereinrichtung 39 gefördert. Zweckmäßigerweise sind Regenerationsgasfördereinrichtungseinlass 37 und Regenerationsgasfördereinrichtungsauslass 38 auch als Anschlussstutzen ausgebildet, an denen jeweils zu- oder weiterführende, beispielsweise als Rohrleitung ausgebildete Kanalabschnitte 11 anordenbar oder angeordnet sind. In Strömungsrichtung des Regenerationsgases 35 wird hierbei eine einen Regenerationsgasheizeinrichtungseinlass 40 und Regenerationsgasheizeinrichtungsauslass 41 aufweisende, als Einrichtungskomponente 4 ausgebildete Regenerationsgasheizeinrichtung 42 und die einen Regenerationsgaseinlass 43 und einen Regenerationsgasauslass 44 aufweisende Adsorptionsentfeuchtungseinheit 29 durchströmt. Als Regenerationsgasheizeinrichtung 42 sind insbesondere Wärmetauscher oder elektrische Heizungen geeignet. Bevorzugt sind Regenerationsgasheizeinrichtungseinlass 40 und Regenerationsgasheizeinrichtungsauslass 41 sowie Regenerationsgaseinlass 43 und Regenerationsgasauslass 44 auch als Anschlussstutzen ausgebildet, an denen jeweils zu- oder weiterführende, insbesondere als Rohrleitung ausgebildete Kanalabschnitte 11 anordenbar oder angeordnet sind. Zweckmäßigerweise ist die Regenerationsgasfördereinrichtung 39 auf der Regenerationsstrecke 36 stromab der Adsorptionsentfeuchtungseinheit 29 angeordnet und weiter bevorzugt gleichzeitig stromauf der Prozessgastemperiereinrichtung 19 angeordnet, wodurch auf der Regenerationstrecke 36 bevorzugt ein Unterdruck erzeugbar ist oder erzeugt wird.

Zweckmäßigerweise erfolgt eine Warmregeneration der Adsorptionsentfeuchtungseinheit 29. Bei der Warmregeneration wird für die Regeneration eines Trockenmittels der Adsorptionsentfeuchtungseinheit 29 das Regenerationsgas 35 auf eine Temperatur von bspw. 160 °C erhitzt und durch die zu regenerierende Adsorptionsentfeuchtungseinheit 29 geführt. Das heiße Regenerationsgas 35 entzieht dem Trockenmittel die aus dem Prozessgas 2 aufgenommene Feuchtigkeit und gibt diese am Regenerationseinheitsauslass 33 zweckmäßigerweise an die Umgebung ab.

In der in Fig. 3 gezeigten Ausführungsform wird als Regenerationsgas 35 ein Teil des Prozessgases 2 genutzt, der stromauf der Kondensationsentfeuchtungseinheit 26 aus dem Prozessgas 2 abgezweigt wird. Nach dem Abzweigen strömt das Regenerationsgas 35 in Strömungsrichtung auf der Regenrationsstrecke 36 durch die Regenerationsgasheizeinrichtung 42, die Adsorptionsentfeuchtungseinheit 29 und die Regenerationsgasfördereinrichtung 39 über den Regenerationseinheitsauslass 33 in die Umgebung - verlässt somit die Regenerationseinheit 34 und damit die Prozessgasaufbereitungseinrichtung 1.

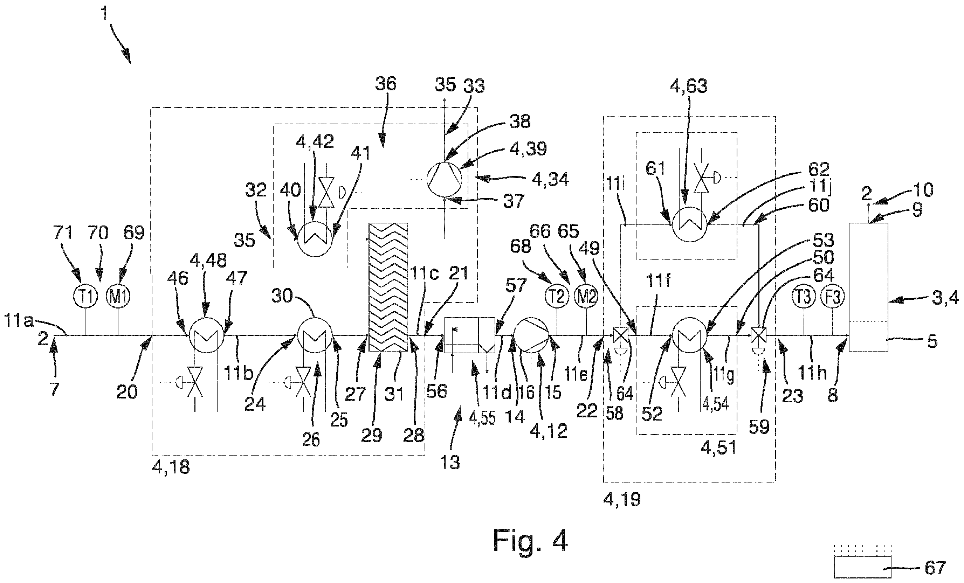

Im Unterschied zu der in Fig. 3 gezeigten Ausführungsform ist das Regenerationsgas 35 in den in den Fign. 2 und 4 dargestellten Ausführungsformen kein Teil des Prozessgases 2, sondern wird der Umgebungsluft entnommen.

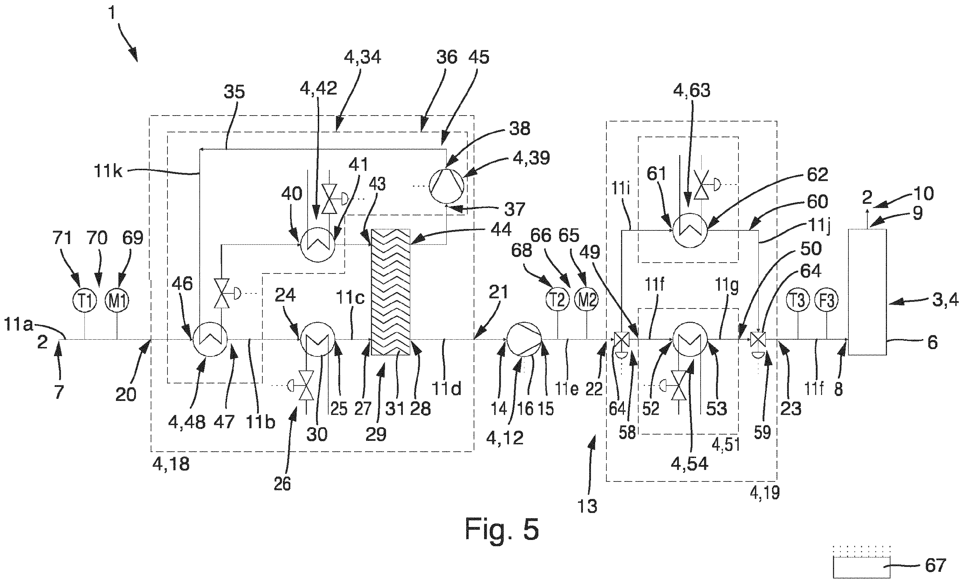

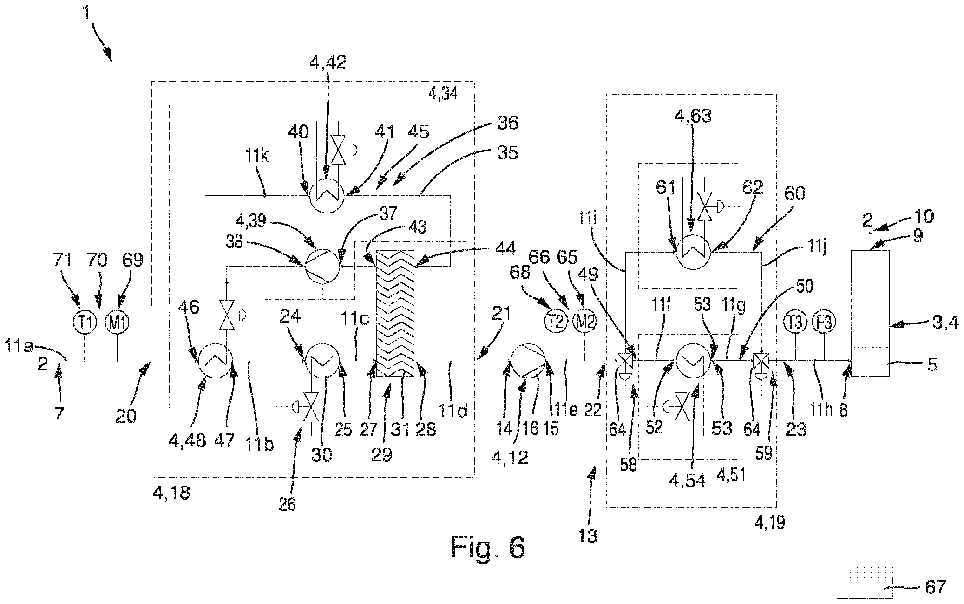

In den beiden in den Fign. 5 und 6 beschriebenen Ausführungsformen ist die Regenerationsstrecke 36 im Gegensatz zu den Ausführungsformen der Fign. 2 bis 4 als geschlossener Kreislauf 45 ausgebildet. In der in Fig. 5 gezeigten fünften Ausführungsform durchströmt das Regenerationsgas 35 die Adsorptionsentfeuchtungseinheit 29 in Bezug auf das Prozessgas 2 im Gleichstrom. In der in der Fig. 6 dargestellten sechsten Ausführungsform durchströmen das Prozessgas 2 und das Regenerationsgas 35 die Adsorptionsentfeuchtungseinheit 29 im Gegenstromprinzip. Ein geschlossener Kreislauf 45 weist den Vorteil auf, dass eine Regeneration der Adsorptionsentfeuchtungseinheit 29 unabhängig von den Umgebungsbedingungen erfolgen kann, bspw. unabhängig von der Umgebungstemperatur und der Umgebungsluft.

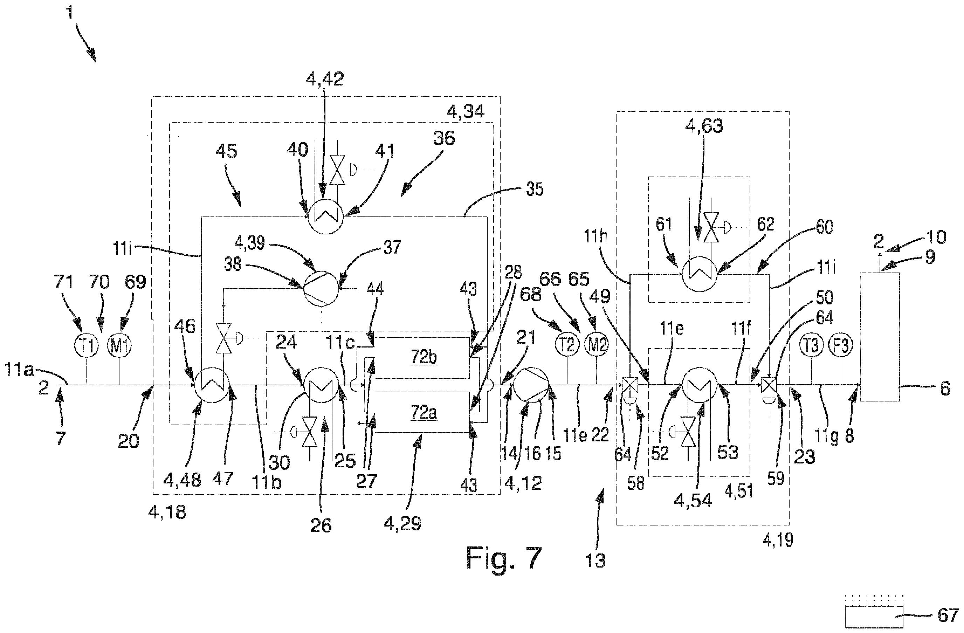

Fig. 7 zeigt eine siebte Ausführungsform der Prozessgasaufbereitungseinrichtung 1. Hierbei weist die Adsorptionsentfeuchtungseinheit 29 der Prozessgasentfeuchtungseinrichtung 18 zwei Behälter 72a und 72b auf, die jeweils mit Adsorptionsmittel gefüllt sind. Es wird jeweils ein Behälter 72a oder 72b mittels Regenerationsgas 35 kalt oder warm regeneriert, während der jeweils andere Behälter 72a oder 72b vom Prozessgas 2 durchströmt wird und dieses auf die gewünschte Feuchte trocknet.

Darüber hinaus weist die Prozessgasentfeuchtungseinrichtung 18 eine über einen Vorheizeinheitseinlass 46 und einen Vorheizeinheitsauslass 47 verfügende, als Einrichtungskomponente 4 ausgebildete Vorheizeinheit 48 auf. Die Vorheizeinheit wird insbesondere als "Frostschutzheizung" für die Kondensationsentfeuchtungseinheit 26 eingesetzt und ist zweckmäßigerweise stromauf der Kondensationsentfeuchtungseinheit 26 und/oder der Adsorptionsentfeuchtungseinheit 29 angeordnet. Im Falle, dass die Regenerationsstrecke 36 als geschlossener Kreislauf 45 ausgebildet ist, wird in der Vorheizeinheit 48 die bei der Regeneration der Adsorptionsentfeuchtungseinheit 29 aufgenommene Feuchtigkeit aus dem Regenerationsgas 35 auskondensiert. Diesbezüglich vorteilhaft ist die Vorheizeinheit 48 ferner auch der Regenerationseinheit 34 zugeordnet, sodass die Vorheizeinheit 48 auf der als geschlossener Kreislauf 45 ausgebildeten Regenerationsstrecke 36 stromauf der Regenerationsgasheizeinrichtung 42 und stromab der Regenerationsgasfördereinrichtung 39 angeordnet ist, wodurch das Prozessgas 2 beim Durchströmen der Vorheizeinheit 48 erwärmt und das Regenerationsgas 35 beim Durchströmen der Vorheizeinheit 48 abgekühlt wird. Zweckmäßigerweise sind Vorheizeinheitseinlass 46 und Vorheizeinheitsauslass 47 als Rohrstutzen ausgebildet, an denen jeweils zu- oder weiterführende, zweckmäßigerweise als Rohrleitung ausgebildete Kanalabschnitte 11 anordenbar oder angeordnet sind.

Die Prozessgastemperiereinrichtung 19 weist eine einen Temperiereinheitseinlass 49 und einen Temperiereinheitsauslass 50 verfügende, als Einrichtungskomponente 4 ausgebildete Temperiereinheit 51 für das Prozessgas 2 auf. Zweckmäßigerweise sind Temperiereinheitseinlass 49 und Temperiereinheitsauslass 50 als Rohrstutzen ausgebildet, an denen jeweils zu- oder weiterführende, zweckmäßigerweise als Rohrleitung ausgebildete Kanalabschnitte 11 anordenbar oder angeordnet sind. Hierbei weist die Temperiereinheit 51 eine über einen Heizeinrichtungseinlass 52 und einen Heizeinrichtungsauslass 53 verfügende, als Einrichtungskomponente 4 ausgebildete Heizeinrichtung 54 auf. Bevorzugt sind auch Heizeinrichtungseinlass 52 und Heizeinrichtungsauslass 53 als Rohrstutzen ausgebildet, an denen jeweils zu- oder weiterführende, zweckmäßigerweise als Rohrleitung ausgebildete Kanalabschnitte 11 anordenbar oder angeordnet sind. Die Heizeinrichtung 54 ist vorteilhafterweise geeignet, das Prozessgas 2 in der Trocknungsphase der Behandlung des Prozessgutes durch Kühlen oder Erwärmen aufzubereiten, insbesondere ist ein Temperaturbereich von 10 °C bis 250 °C einstellbar, bevorzugt zumindest oberhalb der Umgebungstemperatur.

Überdies weist die Prozessgasaufbereitungseinrichtung 1 eine insbesondere stromab der Prozessgasentfeuchtungseinrichtung 18 und stromauf der Prozessgastemperiereinrichtung 19 angeordnete, als Einrichtungskomponente 4 ausgebildete Befeuchtungseinrichtung 55 auf, die über einen Befeuchtungseinrichtungseinlass 56 und einen Befeuchtungseinrichtungsauslass 57 verfügt. Bevorzugt sind auch Befeuchtungseinrichtungseinlass 56 und Befeuchtungseinrichtungsauslass 57 als Rohrstutzen ausgebildet, an denen jeweils zu- oder weiterführende, zweckmäßigerweise als Rohrleitung ausgebildete Kanalabschnitte 11 anordenbar oder angeordnet sind. Durch die Befeuchtungseinrichtung 55 ist es möglich das Prozessgas 2 zu befeuchten und auch relative Feuchten des Prozessgases 2 einzustellen, die betragsmäßig höher sind als die des am Prozessgaseinlass 7 in die Prozessgasaufbereitungseinrichtung 1 eintretenden Prozessgases 2.

Des Weiteren weist die Prozessgastemperiereinrichtung 19 eine über einen Bypasseinlass 58 und einen Bypassauslass 59 verfügende, parallel zur Temperiereinheit 51 geschaltete, als Einrichtungskomponente 4 ausgebildete Bypasseinheit 60 auf. Die Bypasseinheit 60 wiederum verfügt über eine einen Kühleinheitseinlass 61 und einen Kühleinheitsauslass 62 aufweisende, als Einrichtungskomponente 4 ausgebildete Kühleinheit 63, insbesondere einen Wärmetauscher oder dergleichen, für das Prozessgas 2 auf. Bevorzugt sind Kühleinheitseinlass 61 und Kühleinheitsauslass 62 als Rohrstutzen ausgebildet, an denen jeweils zu- oder weiterführende, zweckmäßigerweise als Rohrleitung ausgebildete Kanalabschnitte 11 anordenbar oder angeordnet sind. An der Bypasseinheit 60 ist eine als Einrichtungskomponente 4 ausgebildete Ventilanordnung 64 zum wahlweisen Durchströmen der Temperiereinheit 51 oder der Bypasseinheit 60 angeordnet, wobei die Kühleinheit 63 ein Bestandteil der Bypasseinheit 60 ist. Die Bypasseinheit 60 ist zweckmäßigerweise als Kanalabschnitt 11 in Form einer Rohrleitung ausgebildet. Als Ventilanordnung 64 werden zweckmäßigerweise zwei 3-Wege-Ventile verwendet oder eine sonstige Ventilanordnung 64 die zum wahlweisen Durchströmen der Temperiereinheit 51 oder der Bypasseinheit 60 geeignet ist.

Die Prozessgasaufbereitungseinrichtung 1 verfügt zusätzlich über eine über einen Relativfeuchte-Sensor 65 zur Messung der relativen Feuchte des Prozessgases 2 verfügende erste Messeinrichtung 66, wobei die erste Messeinrichtung 66 stromab der Prozessgasentfeuchtungseinrichtung 18 angeordnet ist. Mittels des Relativfeuchte-Sensors 65 wird die relative Feuchte im Prozessgas 2 gemessen und als Istwert in Form eines Sensorsignals an die Steuerungseinrichtung 67 übermittelt. Die Steuerungseinrichtung 67 ist konfiguriert, um alle Einrichtungskomponenten 4 unabhängig voneinander zu regeln und/oder zu steuern. Die jeweiligen Ein- und Auslässe der Einrichtungskomponenten 4 sind entsprechend der in den Fign. 1 bis 7 gezeigten Ausführungsformen miteinander über Kanalabschnitte 11, bevorzugt in Form einer Rohrleitung, verbunden. Auch stromauf des Prozessgaseinlasses 7 und stromab des Prozessgasauslasses 10 angeordnete Peripherie kann über Kanalabschnitte 11, bevorzugt in Form von Rohrleitungen, verbunden sein.

Überdies weist die erste Messeinrichtung 66 ferner einen Temperatursensor 68 zur Messung der Temperatur des Prozessgases 2 auf. Auch der Temperaturwert wird als Istwert für die Temperatur in Form eines Sensorsignals an die Steuereinrichtung 67 übermittelt. Zweckmäßigerweise sind der Relativfeuchte-Sensor und der Temperatursensor 68 der ersten Messeinrichtung 66 als bauliche Einheit ausgebildet.

Aus der am Relativfeuchte-Sensor 69 gemessenen relativen Feuchte des Prozessgases 2 und der am Temperatursensor 68 gemessenen Temperatur wird - wie bereits erläutert - der Absolutfeuchte-Istwert des Prozessgases 2 die absolute Feuchte bestimmt. Die Absolutfeuchte-Istwertbestimmung erfolgt in der ersten Messeinrichtung 66 oder in der Steuerungseinrichtung 67. Für den Fall, dass die Absolutfeuchte-Istwertbestimmung in der ersten Messeinrichtung 66 erfolgt wird der Absolutfeuchte-Istwert als Sensorsignal an die Steuerungseinrichtung 67 übermittelt.

Durch die Steuerungseinrichtung 67 in Verbindung mit der ersten Messeinrichtung 66 wird die Feuchte, bevorzugt die absolute Feuchte, des durch die Prozessgasaufbereitungseinrichtung 1 strömenden Prozessgases 2 geregelt. Vorteilhafterweise wird die Feuchte zumindest während der Trocknungsphase geregelt. Die Regelung erfolgt entweder auf Basis der relativen Feuchte oder der absoluten Feuchte, wobei die Regelung auf Basis der absoluten Feuchte bevorzugt ist, da diese unabhängig von der Temperatur ist.

Hierzu erfolgt in der Steuerungseinrichtung 67 ein erster Absolutfeuchte-Vergleich zwischen einem in der Steuerungseinrichtung 67 hinterlegten Absolutfeuchte-Sollwert und dem Absolutfeuchte-Istwert, wobei der Absolutfeuchte-Istwert, wie beschrieben, aus einem von dem Relativfeuchte-Sensor 65 der ersten Messeinrichtung 66 gemessenen Relativfeuchtewert und einem von dem dazugehörigen Temperatursensor 68 gemessenen Temperaturwert bestimmt wird.

Die Steuerungseinrichtung 67 übermittelt im Nachgang unter Berücksichtigung des ersten Absolutfeuchte-Vergleichs eine Absolutfeuchte-Regelgröße an die Prozessgasentfeuchtungseinrichtung 18, um die absolute Feuchte des Prozessgases 2 zu regeln.

Für eine Trocknung auf eine niedrigere Feuchtigkeit ergeben sich unterschiedliche Möglichkeiten, wobei die Trocknung mittels Kondensationsentfeuchtungseinheit 26 über das Kühlwasser limitiert ist. Die Adsorptionsentfeuchtungseinheit ist über die Kapazität des Trockenmittels limitiert, wobei über eine Regeneration des Trocknungsmittels die aufzunehmende Feuchtigkeit einstellbar ist.

Die absolute Feuchte des Prozessgases 2 wird mittels der von der Steuerungseinrichtung 67 geregelten Prozessgasentfeuchtungseinrichtung 18 so eingestellt, dass der entsprechende Absolutfeuchte-Istwert und Absolutfeuchte-Sollwert für die absolute Feuchte übereinstimmen, zweckmäßigerweise in einem Toleranzbereich von kleiner gleich 3 %. Für die relative Feuchte gilt das zuvor Beschriebene.

In dem Fall, dass beim dem Absolutfeuchte-Vergleich der Absolutfeuchte-Istwert kleiner ist als der Absolutfeuchte-Sollwert wird das Prozessgas 2 befeuchtet. Hierzu wird das Prozessgas 2 zweckmäßigerweise von der Vorheizeinheit 48 erwärmt, sodass die Temperatur des Prozessgases 2 die Aufnahme der zuzuführenden Feuchtigkeit ermöglicht. Die Feuchtigkeit wird dem Prozessgas anschließend mittels Befeuchtungseinrichtung 55 zugeführt. Zweckmäßigerweise ist die erste Messeinrichtung 66 hierzu auch stromauf der Prozessgastemperiereinrichtung 19 angeordnet.

Zudem ist stromauf der Prozessgasentfeuchtungseinrichtung 18 eine über einen Relativfeuchte-Sensor 69 zur Messung der relativen Feuchte des Prozessgases 2 verfügende zweite Messeinrichtung 70 angeordnet. Mittels des Relativfeuchte-Sensors 69 wird die relative Feuchte im Prozessgas 2 gemessen und als weiterer Istwert in Form eines Sensorsignals an die Steuerungseinrichtung 67 übermittelt.

Auch die zweite Messeinrichtung 70 verfügt ferner bevorzugt über einen Temperatursensor 71 zur Messung der Temperatur des Prozessgases 2, wobei der Relativfeuchte-Sensor 69 und der Temperatursensor 71 der zweiten Messeinrichtung 70 zweckmäßigerweise als bauliche Einheit ausgebildet sind. Für den Fall, dass die Absolutfeuchte-Istwertbestimmung in der zweiten Messeinrichtung 70 erfolgt wird der Absolutfeuchte-Istwert als Sensorsignal an die Steuerungseinrichtung 67 übermittelt.

Über eine zweite auf Basis der zweiten Messeinrichtung 70 erfolgende Regelung und/oder Steuerung ist jede Einrichtungskomponente 4 der Prozessgasaufbereitungseinrichtung 1 zuund/oder abschaltbar.

Stromauf der Prozessgasentfeuchtungseinrichtung 1 ist hierzu eine über einen Relativfeuchte-Sensor 69 zur Messung der relativen Feuchte des Prozessgases 2 und einen Temperatursensor 71 zur Messung der Temperatur des Prozessgases 2 verfügende zweite Messeinrichtung 70 angeordnet, und in der Steuerungseinrichtung 67 ein zweiter Absolutfeuchte-Vergleich zwischen einem in der Steuerungseinrichtung 67 hinterlegten Absolutfeuchte-Sollwert, der sich zweckmäßigerweise von dem Absolutfeuchte-Sollwert zur Regelung der Feuchte unterscheidet, und einem Absolutfeuchte-Istwert erfolgt, wobei der Absolutfeuchte-Istwert aus einem von dem Relativfeuchte-Sensor 69 der zweiten Messeinrichtung 70 gemessenen Relativfeuchtewert und einem von dem dazugehörigen Temperatursensor 71 gemessenen Temperaturwert bestimmt wird.

Die Absolutfeuchte-Istwertbestimmung erfolgt bevorzugt in der zweiten Messeinrichtung 70 oder in der Steuerungseinrichtung 67.

Die Steuerungseinrichtung 67 übermittelt unter Berücksichtigung des zweiten Absolutfeuchte-Vergleichs eine Absolutfeuchte-Regelgröße an jede Einrichtungskomponente 4, um die die jeweilige Einrichtungskomponente 4 der Prozessgasaufbereitungseinrichtung 1 zu- und/oder abzuschalten. Hierdurch ist es möglich während des laufenden Verfahrens jede einzelne Einrichtungskomponente 4 zu- und/oder abzuschalten, insbesondere jedoch die Kondensationsentfeuchtungseinheit 26 und/oder die Adsorptionsentfeuchtungseinheit 29 und/oder die Befeuchtungseinrichtung 55. Überraschenderweise wird durch diese zeitgemäße, innovative und proaktive Regelungs- und/oder Steuerungstechnik eine enorme Energieeinsparung bewirkt, eine verbesserte Aufbereitung des Prozessgases 2, insbesondere im Hinblick auf die Temperatur und Feuchte erzielt.

Die Regelung und/oder Steuerung der Einrichtungskomponenten 4 kann, wie vorab beschrieben auf der absoluten Feuchte, gleichermaßen auch auf der relativen Feuchte basieren. Bevorzugt wird auch hier die Regelung und/oder Steuerung über die absolute Feuchte, da diese temperaturunabhängig ist. Zweckmäßigerweise in einem Toleranzbereich von kleiner gleich 3 %.

Das Verfahren zur Aufbereitung von Prozessgas 2 zur Behandlung eines Prozessgutes in einem Prozessapparat 3 läuft in der Prozessaufbereitungseinrichtung 1 wie nachstehend näher erläutert ab:

Die Aufbereitung des Prozessgases 2 zur Behandlung des Prozessgutes in dem Prozessapparat 3, insbesondere einem Fluidisierungsapparat 5 oder einem Beschichtungsapparat 6, ist in zwei nacheinander ablaufende Verfahrensphasen, nämlich eine Trocknungsphase und eine Abkühlphase, unterteilt. Am Ende jeder Behandlung des Prozessgutes steht somit die Abkühlphase des Prozessgutes. Diese ist notwendig, um ein "Ausschwitzen" von Feuchtigkeit, insbesondere in Form von Wasser, aus dem behandelten Prozessgut zu vermeiden, da die Feuchtigkeit ansonsten kondensieren und zu einer unerwünschten Agglomeration des Prozessgutes im Prozessapparat 3 führt oder führen kann. Daher wird bei der Behandlung des Prozessgutes im Prozessapparat 3 in der Trocknungsphase die Temperiereinheit 51 der Prozessgastemperiereinrichtung 19 durchströmt und in der Abkühlphase wird die über die Kühleinheit 63 verfügende Bypasseinheit 60 durchströmt. Beim Durchströmen der Temperiereinheit 51 wird die Bypasseinheit 60 nicht durchströmt und umgekehrt. Das Verfahren zur Aufbereitung von Prozessgas 2 in einer Prozessgasaufbereitungseinrichtung 1 weist dadurch neben dem Vorteil eines deutlich verringerten Energieverbrauchs während der gesamten Behandlung des Prozessgutes zusätzlich auch den Vorteil auf, dass die Abkühlzeiten für das Prozessgas 2, das insbesondere Umgebungsluft ist, in der sich an die Trocknungsphase anschließenden Abkühlphase des Prozessgutes durch die Anordnung der Kühleinheit 63 in der Bypasseinheit 60 verkürzt werden. Hierdurch kann auch das Prozessgut schneller und energieeffizienter abgekühlt werden.

Während der Behandlung des Prozessgutes in den Prozessapparat 3 tritt das Prozessgas 2 am Prozessgaseinlass 7 in die Prozessaufbereitungseinrichtung 1 ein und durchströmt diese und den sich an die Prozessaufbereitungseinrichtung 1 anschließenden Prozessapparat 3. Das Prozessgas 2 wird hierbei von der Prozessgasfördereinrichtung 12 gefördert. Neben der Prozessgasentfeuchtungseinrichtung 18 und der Prozessgastemperiereinrichtung 19 durchströmt das Prozessgas 2 dabei auch eine gegebenenfalls insbesondere stromab der Prozessgasentfeuchtungseinrichtung 18 und stromauf der Prozessgastemperiereinrichtung 19 angeordnete Befeuchtungseinrichtung 55. Die Befeuchtungseinrichtung 55 ermöglicht es, das Prozessgas 2 zu befeuchten und auch relative Feuchten des Prozessgases 2 einzustellen, die betragsmäßig höher sind als die des am Prozessgaseinlass 7 in die Prozessgasaufbereitungseinrichtung 1 eintretenden Prozessgases 2. Wird die Befeuchtungseinrichtung 55 eingesetzt, wird das Prozessgas 2 vor der Befeuchtung zweckmäßigerweise von der Vorheizeinheit 48 auf eine Temperatur erwärmt, die sicherstellt, dass das Prozessgas 2 die über die Befeuchtungseinrichtung 55 zugeführte Feuchtigkeit aufnehmen kann.

In dem Verfahren wird die Feuchte des durch die Prozessgasaufbereitungseinrichtung 1 strömenden Prozessgases 2 geregelt, insbesondere zumindest während der Trocknungsphase. Die Feuchte des Prozessgases 2 kann sowohl mittels der relativen Feuchte als auch mittels der absoluten Feuchte geregelt werden, wobei bevorzugt mittels der absoluten Feuchte geregelt wird, da die absolute Feuchte im Unterschied zur relativen Feuchte unabhängig von der Temperatur des Prozessgases 2 ist.

Bevorzugt weist hierzu die erste Messeinrichtung 66 den Relativfeuchte-Sensor 65 zur Messung der relativen Feuchte des Prozessgases 2 und den Temperatursensor 68 zur Messung der Temperatur des Prozessgases 2 auf. Der Relativfeuchtewert und der Temperaturwert werden als Sensorsignal an die Steuerungseinrichtung 67 übermittelt.

In der Steuerungseinrichtung 67 erfolgt ein erster Absolutfeuchte-Vergleich zwischen dem hinterlegten Absolutfeuchte-Sollwert und Absolutfeuchte-Istwert, wobei der Absolutfeuchte-Istwert aus einem von dem Relativfeuchte-Sensor 65 der ersten Messeinrichtung 66 gemessenen Relativfeuchtewert und einem von dem dazugehörigen Temperatursensor 68 gemessenen Temperaturwert bestimmt wird. Die Absolutfeuchte-Istwertbestimmung erfolgt zweckmäßigerweise in der ersten Messeinrichtung 66 oder in der Steuerungseinrichtung 67. Die Steuerungseinrichtung 67 übermittelt unter Berücksichtigung des ersten Absolutfeuchte-Vergleichs eine Absolutfeuchte-Regelgröße an die Prozessgasentfeuchtungseinrichtung 18, um die absolute Feuchte des Prozessgases 2 zu regeln. Zweckmäßigerweise wird die Feuchte in einem Toleranzbereich von +3 % des Sollwerts eingeregelt.

Auch eine ggf. durchzuführende Befeuchtung erfolgt über die Regelung mittels der ersten Messeinrichtung 66, wie bereits vorab erläutert.

Weist die Prozessgasentfeuchtungseinrichtung 18 eine insbesondere als Trocknungsrad 31 ausgebildete Adsorptionsentfeuchtungseinheit 29 zur Trocknung des Prozessgases 2 auf, dann verfügt diese über eine die Adsorptionsentfeuchtungseinheit 29 zumindest teilweise regenerierende Regenerationseinheit 34. Dargestellt sind solche Prozessgasentfeuchtungseinrichtungen 18 u. a. in den Fign. 2 bis 7.

Das Regenerationsgas 35 durchströmt stromauf der Adsorptionsentfeuchtungseinheit 29 die Regenerationsgasheizeinrichtung 42, die das Regenerationsgas 35 trocknet und erwärmt, sodass das Regenerationsgas 35 Feuchtigkeit der Adsorptionsentfeuchtungseinheit 29 aufnehmen kann. Das Regenerationsgas 35 wird hierbei in einem Maße getrocknet und erwärmt, dass die Adsorptionsentfeuchtungseinheit 29 das ebenfalls durch die Adsorptionsentfeuchtungseinheit 29 strömende Prozessgas 2 auf eine festgelegte relative Feuchte trocknet oder trocknen kann. Insbesondere regelt und/oder steuert die Steuerungseinrichtung 67 daher aufgrund des ersten Absolutfeuchte-Vergleichs zwischen dem hinterlegten Absolutfeuchte-Sollwert und Absolutfeuchte-Istwert die Regenerationsgasheizeinrichtung 42. Bevorzugt durchströmt hierbei das Regenerationsgas 35 die Adsorptionsentfeuchtungseinheit 29, wie in Fig. 6 dargestellt, im Gegenstrom zum Prozessgas 2.

Überdies weist die Prozessgasentfeuchtungseinrichtung 18 eine Vorheizeinheit 48 auf, die zweckmäßigerweise stromauf der Kondensationsentfeuchtungseinheit 26 angeordnet ist, wobei die Vorheizeinheit 48 das über den Prozessgaseinlass 7 in die Prozessgasaufbereitungseinrichtung 1 eintretende Prozessgas 2 erwärmt, um ein Einfrieren der Kondensationsentfeuchtungseinheit 26 zu verhindern. Die Vorheizeinheit 48 wird insbesondere als "Frostschutzheizung" für die Kondensationsentfeuchtungseinheit 26 eingesetzt. Im Falle, dass die Regenerationsstrecke 36 als geschlossener Kreislauf 45 ausgebildet ist, wird in der Vorheizeinheit 48 die bei der Regeneration der Adsorptionsentfeuchtungseinheit 29 aufgenommene Feuchtigkeit aus dem Regenerationsgas 35 auskondensiert.

Jede einzelne Einrichtungskomponente 4 der Prozessgasaufbereitungseinrichtung 1 ist zu- und/oder abschaltbar. Hierzu ist stromauf der Prozessgasentfeuchtungseinrichtung 18 eine über einen Relativfeuchte-Sensor 69 zur Messung der relativen Feuchte des Prozessgases 2 und einen Temperatursensor 71 zur Messung der Temperatur des Prozessgases 2 verfügende zweite Messeinrichtung 70 angeordnet. In der Steuerungseinrichtung erfolgt ein zweiter Absolutfeuchte-Vergleich zwischen Absolutfeuchte-Sollwert und Absolutfeuchte-Istwert der zweiten Messeinrichtung 70, wobei der Absolutfeuchte-Istwert aus einem von dem Relativfeuchte-Sensor 69 der zweiten Messeinrichtung 70 gemessenen Relativfeuchtewert und einem von dem dazugehörigen Temperatursensor 71 gemessenen Temperaturwert bestimmt wird. Zweckmäßigerweise erfolgt die Absolutfeuchte-Istwertbestimmung in der zweiten Messeinrichtung 70 oder in der Steuerungseinrichtung 67. Die Steuerungseinrichtung 67 übermittelt hierzu unter Berücksichtigung des zweiten Absolutfeuchte-Vergleichs eine Absolutfeuchte-Regelgröße an jede Einrichtungskomponente 4, um die die jeweilige Einrichtungskomponente 4 der Prozessgasaufbereitungseinrichtung 1 zuund/oder abzuschalten. Überraschenderweise wird durch diese zeitgemäße, innovative und proaktive Regelungstechnik eine enorme Energieeinsparung bewirkt, eine verbesserte Aufbereitung der relativen Feuchte und Temperatur des Prozessgases 2 erzielt. Zweckmäßigerweise werden durch das Ab- oder Zuschalten von Einrichtungskomponenten 4 die Kosten für den Anlagenbetrieb deutlich gesenkt.

Die Steuerungseinrichtung 67 entscheidet auf der Basis des Absolutfeuchte-Vergleichs welche Einrichtungskomponenten 4 der Prozessgasaufbereitungseinrichtung 1 zur Entfeuchtung des Prozessgases 2 zuund/oder abgeschaltet werden. Im Folgenden werden Absolutfeuchte-Sollwerte aufgeführt, die in der Praxis beim Betrieb der Prozessgasaufbereitungseinrichtung 1 verwendet werden:

- Entfeuchtung nur über die Kondensationsentfeuchtungseinheit 26 bei einem Absolutfeuchte-Sollwert von größer gleich 8 g/m$^3$; Adsorptionsentfeuchtungseinheit 29 ist bei Vorhandensein abgeschaltet;

- Entfeuchtung nur über die Adsorptionsentfeuchtungseinheit 29 bei einem Absolutfeuchte-Sollwert von kleiner 8 g/m$^3$; Kondensationsentfeuchtungseinheit 26 ist bei Vorhandensein abgeschaltet;

- Entfeuchtung über die Kondensationsentfeuchtungseinheit 26 und über die Adsorptionsentfeuchtungseinheit 29 bei einem Absolutfeuchte-Sollwert von kleiner 8 g/m$^3$ und einer Differenz zwischen Absolutfeuchte-Istwert und Absolutfeuchte-Sollwert von größer gleich 6 g/m$^3$;

- Befeuchtung über die Befeuchtungseinrichtung 55 bei einem Absolutfeuchte-Istwert kleiner als der Absolutfeuchte-Sollwert.

**Patentansprüche**

1. Prozessgasaufbereitungseinrichtung (1) für ein Prozessgas (2) zur Behandlung eines Prozessgutes in einem Prozessapparat (3), mit einem Prozessgaseinlass (7) und einem mit dem Prozessapparat (3) fluidisch verbundenen Prozessgasauslass (10), wobei das Prozessgas (2) auf einer sich vom Prozessgaseinlass (7) zum Prozessgasauslass (10) erstreckenden Aufbereitungsstrecke (13) strömt, mit einer in Strömungsrichtung des Prozessgases (2) als Einrichtungskomponente (4) ausgebildeten Prozessgasentfeuchtungseinrichtung (18) und einer stromab der Prozessgasentfeuchtungseinrichtung (18) angeordneten, als Einrichtungskomponente (4) ausgebildeten Prozessgastemperiereinrichtung (19), wobei die Prozessgasentfeuchtungseinrichtung (18) über einen Entfeuchtungseinrichtungseinlass (20) und einen Entfeuchtungseinrichtungsauslass (21) und die Prozessgastemperiereinrichtung (19) über einen Temperiereinrichtungseinlass (22) und einen Temperiereinrichtungsauslass (23) verfügt, und wobei die Prozessgastemperiereinrichtung (19) eine einen Temperiereinheitseinlass (49) und einen Temperiereinheitsauslass (50) verfügende, als Einrichtungskomponente (4) ausgebildete Temperiereinheit (51) für das Prozessgas (2), eine einen Kühleinheitseinlass (61) und einen Kühleinheitsauslass (62) verfügende, als Einrichtungskomponente (4) ausgebildete Kühleinheit (63) für das Prozessgas (2) und eine über einen Bypasseinlass (58) und einen Bypassauslass (59) verfügende, parallel zur Temperiereinheit (51) geschaltete, als Einrichtungskomponente (4) ausgebildete Bypasseinheit (60) aufweist, wobei an der Bypasseinheit (60) eine als Einrichtungskomponente (4) ausgebildete Ventilanordnung (64) zum wahlweisen Durchströmen der Temperiereinheit (51) oder der Bypasseinheit (60) angeordnet ist, und mit einer über einen Relativfeuchte-Sensor (65) zur Messung der relativen Feuchte des Prozessgases (2) verfügende erste Messeinrichtung (66), wobei die erste Messeinrichtung (66) stromab der Prozessgasentfeuchtungseinrichtung (18) angeordnet ist und mit einer Steuerungseinrichtung (67), **dadurch gekennzeichnet, dass** die Kühleinheit (63) ein Bestandteil der Bypasseinheit (60) ist.

2. Prozessgasaufbereitungseinrichtung (1) nach Anspruch 1, **dadurch gekennzeichnet, dass** die Prozessgasaufbereitungseinrichtung (1) einen als Einrichtungskomponente (4) ausgebildeten Prozessapparat (3) aufweist, der zweckmäßigerweise als Fluidisierungsapparat (5) oder als Beschichtungsapparat (6) ausgebildet ist.

3. Prozessgasaufbereitungseinrichtung (1) nach Anspruch 1 oder 2, **dadurch gekennzeichnet, dass** die Prozessgasaufbereitungseinrichtung (1) eine als Einrichtungskomponente (4) ausgebildete Prozessgasfördereinrichtung (12) aufweist, wobei die Prozessgasfördereinrichtung (12) zweckmäßigerweise stromauf und/oder stromab des Prozessapparates (3) angeordnet ist.

4. Prozessgasaufbereitungseinrichtung (1) nach einem der vorhergehenden Ansprüche, **dadurch gekennzeichnet, dass** die Prozessgasentfeuchtungseinrichtung (18) eine über einen Kondensationsentfeuchtungseinheitseinlass (24) und einen Kondensationsentfeuchtungseinheitsauslass (25) verfügende, als Einrichtungskomponente (4) ausgebildete Kondensationsentfeuchtungseinheit (26) und/oder eine über einen Adsorptionsentfeuchtungseinheitseinlass (27) und einen Adsorptionsentfeuchtungseinheitsauslass (28) verfügende, als Einrichtungskomponente (4) ausgebildete Adsorptionsentfeuchtungseinheit (29) aufweist, wobei zweckmäßigerweise auf der Aufbereitungsstrecke (13) die Kondensationsentfeuchtungseinheit (26) stromauf der Adsorptionsentfeuchtungseinheit (29) angeordnet ist, wobei zweckmäßigerweise die Adsorptionsentfeuchtungseinheit (29) als Trocknungsrad (31) ausgebildet ist und/oder die Adsorptionsentfeuchtungseinheit (29) über eine einen Regenerationseinheitseinlass (32) und einen Regenerationseinheitsauslass (33) aufweisende, als Einrichtungskomponente (4) ausgebildete Regenerationseinheit (34) verfügt, wobei ein Regenerationsgas (35) von einer einen Regenerationsgasfördereinrichtungseinlass (37) und einen Regenerationsgasfördereinrichtungsauslass (38) aufweisenden, als Einrichtungskomponente (4) ausgebildeten Regenerationsgasfördereinrichtung (39) auf einer sich vom Regenerationseinheitseinlass (32) zum Regenerationseinheitsauslass (33) erstreckenden Regenerationsstrecke (36) gefördert wird und in Strömungsrichtung des Regenerationsgases (35) eine einen Regenerationsgasheizeinrichtungseinlass (40) und Regenerationsgasheizeinrichtungsauslass (41) aufweisende, als Einrichtungskomponente (4) ausgebildete Regenerationsgasheizeinrichtung (42) und die einen Regenerationsgaseinlass (43) und einen Regenerationsgasauslass (44) aufweisende Adsorptionsentfeuchtungseinheit (29) durchströmt, wobei die Regenerationsstrecke (36) zweckmäßigerweise als geschlossener Kreislauf (45) ausgebildet ist.

5. Prozessgasaufbereitungseinrichtung (1) nach einem der vorhergehenden Ansprüche, **dadurch gekennzeichnet, dass** die Prozessgasentfeuchtungseinrichtung (18) eine über einen Vorheizeinheitseinlass (46) und einen Vorheizeinheitsauslass (47) verfügende, als Einrichtungskomponente (4) ausgebildete Vorheizeinheit (48) aufweist, die zweckmäßigerweise stromauf der Kondensationsentfeuchtungseinheit (26) und/oder der Adsorptionsentfeuchtungseinheit (29) angeordnet ist.

6. Prozessgasaufbereitungseinrichtung (1) nach einem der Ansprüche 6 und 7, **dadurch gekennzeichnet, dass** die Vorheizeinheit (48) ferner auch der Regenerationseinheit (34) zugeordnet ist, wobei die Vorheizeinheit (48) auf der als Kreislauf (45) ausgebildeten Regenerationsstrecke (36) stromauf der Regenerationsgasheizeinrichtung (42) und stromab der Regenerationsgasfördereinrichtung (39) angeordnet ist, wodurch das Prozessgas (2) beim Durchströmen der Vorheizeinheit (48) erwärmt und das Regenerationsgas (35) beim Durchströmen der Vorheizeinheit (48) abgekühlt wird.

7. Prozessgasaufbereitungseinrichtung (1) nach einem der vorhergehenden Ansprüche, **dadurch gekennzeichnet, dass** die erste Messeinrichtung (66) stromauf der Prozessgastemperiereinrichtung (19) angeordnet ist und/oder dass die erste Messeinrichtung (66) ferner einen Temperatursensor (68) zur Messung der Temperatur des Prozessgases (2) aufweist, wobei der Relativfeuchte-Sensor (65) und der Temperatursensor (68) der ersten Messeinrichtung (66) zweckmäßigerweise als bauliche Einheit ausgebildet sind.

8. Prozessgasaufbereitungseinrichtung (1) nach einem der vorhergehenden Ansprüche, **dadurch gekennzeichnet, dass** die Temperiereinheit (51) eine über einen Heizeinrichtungseinlass (52) und einen Heizeinrichtungsauslass (53) verfügende, als Einrichtungskomponente (4) ausgebildete Heizeinrichtung (54) aufweist und/oder die Prozessgasfördereinrichtung (12) stromab der Prozessgasentfeuchtungseinrichtung (18) und stromauf der Prozessgastemperiereinrichtung (19) angeordnet ist.

9. Prozessgasaufbereitungseinrichtung (1) nach einem der vorhergehenden Ansprüche, **dadurch gekennzeichnet, dass** stromauf der Prozessgasentfeuchtungseinrichtung (18) eine über einen Relativfeuchte-Sensor (69) zur Messung der relativen Feuchte des Prozessgases (2) verfügende zweite Messeinrichtung (70) angeordnet ist, wobei zweckmäßigerweise die zweite Messeinrichtung (70) ferner über einen Temperatursensor (71) zur Messung der Temperatur des Prozessgases (2) verfügt und/oder der Relativfeuchte-Sensor (69) und der Temperatursensor (71) der zweiten Messeinrichtung (70) als bauliche Einheit ausgebildet sind und/oder die Prozessgasaufbereitungseinrichtung (1) eine insbesondere stromab der Prozessgasentfeuchtungseinrichtung (18) und stromauf der Prozessgastemperiereinrichtung (19) angeordnete, als Einrichtungskomponente (4) ausgebildete Befeuchtungseinrichtung (55) aufweist, die über einen Befeuchtungseinrichtungseinlass (56) und einen Befeuchtungseinrichtungsauslass (57) verfügt.

10. Verfahren zur Aufbereitung von Prozessgas (2) zur Behandlung eines Prozessgutes in einem Prozessapparat (3) während einer Trocknungsphase und einer Abkühlphase aufweisend eine Prozessgasaufbereitungseinrichtung (1), mit einem Prozessgaseinlass (7) und einem mit dem Prozessapparat (3) fluidisch verbundenen Prozessgasauslass (10), wobei das Prozessgas (2) auf einer sich vom Prozessgaseinlass (7) zum Prozessgasauslass (10) erstreckenden Aufbereitungsstrecke (13) strömt, mit einer in Strömungsrichtung des Prozessgases (2) als Einrichtungskomponente (4) ausgebildeten Prozessgasentfeuchtungseinrichtung (18) und einer stromab der Prozessgasentfeuchtungseinrichtung (18) angeordneten, als Einrichtungskomponente (4) ausgebildeten Prozessgastemperiereinrichtung (19), wobei die Prozessgasentfeuchtungseinrichtung (18) über einen Entfeuchtungseinrichtungseinlass (20) und einen Entfeuchtungseinrichtungsauslass (21) und die Prozessgastemperiereinrichtung (19) über einen Temperiereinrichtungseinlass (22) und einen Temperiereinrichtungsauslass (23) verfügt, und wobei die Prozessgastemperiereinrichtung (19) eine einen Temperiereinheitseinlass (49) und einen Temperiereinheitsauslass (50) verfügende, als Einrichtungskomponente (4) ausgebildete Temperiereinheit (51) für das Prozessgas (2), eine einen Kühleinheitseinlass (61) und einen Kühleinheitsauslass (62) verfügende, als Einrichtungskomponente (4) ausgebildete Kühleinheit (63) für das Prozessgas (2) und eine über einen Bypasseinlass (58) und einen Bypassauslass (59) verfügende, parallel zur Temperiereinheit (51) geschaltete, als Einrichtungskomponente (4) ausgebildete Bypasseinheit (60) aufweist, wobei an der Bypasseinheit (60) eine als Einrichtungskomponente (4) ausgebildete Ventilanordnung (64) zum wahlweisen Durchströmen der Temperiereinheit (51) oder der Bypasseinheit (60) angeordnet ist, und mit einer über einen Relativfeuchte-Sensor (65) zur Messung der relativen Feuchte des Prozessgases (2) verfügende erste Messeinrichtung (66), wobei die erste Messeinrichtung (66) stromab der Prozessgasentfeuchtungseinrichtung (18) angeordnet ist und mit einer Steuerungseinrichtung (67), **dadurch gekennzeichnet, dass** die Kühleinheit (63) ein Bestandteil der Bypasseinheit (60) ist, und wobei bei der Behandlung des Prozessgutes im Prozessapparat (3) in der Trocknungsphase die Temperiereinheit (51) durchströmt wird und in der Abkühlphase die über die Kühleinheit (63) verfügende Bypasseinheit (60) durchströmt wird.

11. Verfahren nach Anspruch 10, **dadurch gekennzeichnet, dass** die Feuchte des durch die Prozessgasaufbereitungseinrichtung (1) strömenden Prozessgases (2) geregelt wird, wobei zweckmäßigerweise die erste Messeinrichtung (66) einen Temperatursensor (68) zur Messung der Temperatur des Prozessgases (2) aufweist, und in der Steuerungseinrichtung (67) ein erster Absolutfeuchte-Vergleich zwischen Absolutfeuchte-Sollwert und Absolutfeuchte-Istwert erfolgt, wobei der Absolutfeuchte-Istwert aus einem von dem Relativfeuchte-Sensor (65) der ersten Messeinrichtung (66) gemessenen Relativfeuchtewert und einem von dem dazugehörigen Temperatursensor (68) gemessenen Temperaturwert bestimmt wird, und wobei insbesondere die Absolutfeuchte-Istwertbestimmung in der ersten Messeinrichtung (66) oder in der Steuerungseinrichtung (67) erfolgt.

12. Verfahren nach einem der Ansprüche 10 oder 11, **dadurch gekennzeichnet, dass** das Prozessgas (2) mittels einer insbesondere stromab der Prozessgasentfeuchtungseinrichtung (18) und stromauf der Prozessgastemperiereinrichtung (19) angeordneten Befeuchtungseinrichtung (55) befeuchtet wird.

13. Verfahren nach einem der Ansprüche 10 bis 12, **dadurch gekennzeichnet, dass** die Prozessgasentfeuchtungseinrichtung (18) eine über eine Regenerationseinheit (34) verfügende Adsorptionsentfeuchtungseinheit (29) aufweist, wobei die Adsorptionsentfeuchtungseinheit (29) durch die Regenerationseinheit (34) zumindest teilweise regeneriert wird, wobei zweckmäßigerweise die Regenerationseinheit (34) eine ein Regenerationsgas (35) erwärmende Regenerationsgasheizeinrichtung (42) aufweist, sodass das Regernationsgas (35) beim Durchströmen der Adsorptionsentfeuchtungseinheit (29) Feuchtigkeit aufnimmt, wodurch die Adsorptionsentfeuchtungseinheit (29) zumindest teilweise getrocknet und dadurch regeneriert wird, und wobei insbesondere das Regenerationsgas (35) die Adsorptionsentfeuchtungseinheit (29) im Gegenstrom zum Prozessgas (2) durchströmt.

14. Verfahren nach einem der Ansprüche 10 bis 13, **dadurch gekennzeichnet, dass** die Prozessgasentfeuchtungseinrichtung (19) eine Vorheizeinheit (48) aufweist, die zweckmäßigerweise stromauf der Kondensationsentfeuchtungseinheit (26) angeordnet ist, wobei die Vorheizeinheit (48) das über den Prozessgaseinlass (7) in die Prozessgasaufbereitungseinrichtung (1) eintretende Prozessgas (2) erwärmt, um ein Einfrieren der Kondensationsentfeuchtungseinheit (26) zu verhindern oder das Prozessgas (2) für die Befeuchtung des Prozessgases (2) zu erwärmen.

15. Verfahren nach einem der Ansprüche 10 bis 14, **dadurch gekennzeichnet, dass** jede Einrichtungskomponente (4) der Prozessgasaufbereitungseinrichtung (1) zu- und/oder abschaltbar ist, wobei zweckmäßigerweise stromauf der Prozessgasentfeuchtungseinrichtung (18) eine über einen Relativfeuchte-Sensor (69) zur Messung der relativen Feuchte des Prozessgases (2) und einen Temperatursensor (71) zur Messung der Temperatur des Prozessgases (2) verfügende zweite Messeinrichtung (70) angeordnet ist, und in der Steuerungseinrichtung (67) ein zweiter Absolutfeuchte-Vergleich zwischen Absolutfeuchte-Sollwert und Absolutfeuchte-Istwert erfolgt, wobei der Absolutfeuchte-Istwert aus einem von dem Relativfeuchte-Sensor (69) der zweiten Messeinrichtung (70) gemessenen Relativfeuchtewert und einem von dem dazugehörigen Temperatursensor (71) gemessenen Temperaturwert bestimmt wird, und wobei insbesondere die Absolutfeuchte-Istwertbestimmung in der zweiten Messeinrichtung (70) oder in der Steuerungseinrichtung (67) erfolgt und/oder die Steuerungseinrichtung (67) unter Berücksichtigung des zweiten Absolutfeuchte-Vergleichs eine Absolutfeuchte-Regelgröße an jede Einrichtungskomponente (4) übermitteln kann, um die die jeweilige Einrichtungskomponente (4) der Prozessgasaufbereitungseinrichtung (1) zu- und/oder abzuschalten.

Fig. 1

EP 4 147 766 A1

Fig. 2

Fig. 3

Fig. 4

EP 4 147 766 A1

Fig. 5

Fig. 6

EP 4 147 766 A1

Fig. 7

EP 4 147 766 A1

Europäisches
Patentamt

European
Patent Office

Office européen
des brevets

## EUROPÄISCHER RECHERCHENBERICHT

**Nummer der Anmeldung**

**EP 22 19 0919**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2017/034132 A1 (TE APPLICATION INC [KR]) 2. März 2017 (2017-03-02) * Abbildungen 1,2,4,5 * ----- | 1,10 | INV. B01D53/06 B01D53/26 F26B21/08 |
| A | WO 2012/034147 A1 (FREH ALFRED [AT]; REITERBAUER ALOIS [AT]) 22. März 2012 (2012-03-22) * Abbildung 1 * ----- | 1-15 | ADD. B01D53/04 |

**RECHERCHIERTE SACHGEBIETE (IPC)**

B01D
F26B

Der vorliegende Recherchenbericht wurde für alle Patentansprüche erstellt

| Recherchenort | Abschlußdatum der Recherche | Prüfer |
|---|---|---|
| München | 12. Januar 2023 | Bergt, Thomas |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 19 0919

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-01-2023

| Im Recherchenbericht angeführtes Patentdokument | Datum der Veröffentlichung | Mitglied(er) der Patentfamilie | Datum der Veröffentlichung |
|---|---|---|---|
| WO 2017034132 A1 | 02-03-2017 | KR 101693287 B1<br>WO 2017034132 A1 | 05-01-2017<br>02-03-2017 |
| WO 2012034147 A1 | 22-03-2012 | AT 510486 A1<br>EP 2507569 A1<br>WO 2012034147 A1 | 15-04-2012<br>10-10-2012<br>22-03-2012 |

Für nähere Einzelheiten zu diesem Anhang : siehe Amtsblatt des Europäischen Patentamts, Nr.12/82

EPO FORM P0461